(19) Europäisches Patentamt / European Patent Office / Office européen des brevets

(11) **EP 2 658 313 A1**

(12) **EUROPEAN PATENT APPLICATION**
published in accordance with Art. 153(4) EPC

(43) Date of publication:
**30.10.2013 Bulletin 2013/44**

(51) Int Cl.:
*H04W 36/04* (2009.01)    *H04W 16/32* (2009.01)
*H04W 24/10* (2009.01)

(21) Application number: **11851273.0**

(22) Date of filing: **12.09.2011**

(86) International application number:
**PCT/JP2011/005116**

(87) International publication number:
**WO 2012/086108 (28.06.2012 Gazette 2012/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2010  JP 2010284624**

(71) Applicant: NEC Corporation
**Tokyo 108-8001 (JP)**

(72) Inventors:
• **WATANABE, Yoshinori**
**Tokyo 108-8001 (JP)**
• **MATSUNAGA, Yasuhiko**
**Tokyo 108-8001 (JP)**
• **KOBAYASHI, Kosei**
**Tokyo 108-8001 (JP)**

(74) Representative: **Vossius & Partner**
**Siebertstrasse 4**
**81675 München (DE)**

(54) **ADJACENCY LIST OPTIMIZATION DEVICE, ADJACENCY LIST GENERATION DEVICE, BASE STATION DEVICE, OPTIMIZATION METHOD OF ADJACENCY LIST, AND NON-TRANSITORY COMPUTER-READABLE MEDIUM**

(57)    A neighbor list optimization unit (11) performs optimization of a neighbor list that is wirelessly transmitted by a base station (2) that manages an objective cell (61). The neighbor list optimization unit (11) includes a cell selection unit (110). The cell selection unit (110) selects, based on cell types defined according to a difference in cell sizes, a plurality of registered cells to be registered in the neighbor list from a plurality of other cells (62) than the objective cell (61). Accordingly, for example, it is possible to perform neighbor list optimization suitable for a heterogeneous network (HetNet) environment in which different types of cells having different sizes in coverage (cell sizes) are adjacently arranged.

Fig. 1

## Description

## Technical Field

The present invention relates to autonomous optimization of a neighbor list wirelessly transmitted from a base station.

## Background Art

A neighbor list (also referred to as a neighbor cell list) is used to control handover of a mobile terminal which is performing communication. A neighbor list is able to include handover parameters such as a cell individual offset (CIO). A base station sends a neighbor list to a mobile station connected to a cell that the base station manages by wirelessly transmitting the neighbor list. Hereinafter, cells registered in a neighbor list among neighbor cells are referred to as "Listed Cells", and cells that are not registered in a neighbor list are referred to as "Detected Cells".

In order to achieve handover of a mobile terminal from a connected cell (referred to as a serving cell) to a neighbor cell, a handover control entity of the serving cell such as a radio resource controller (RNC) or a serving base station instructs the mobile terminal to transmit a measurement report when a predetermined event occurs. The predetermined event is, for example, degradation of radio quality of the serving cell. The measurement report generated by the mobile terminal includes results of measuring radio quality of the serving cell and its neighbor cell (neighbor cells). Upon receiving the measurement report from the mobile terminal, the handover control entity of the serving cell determines a handover destination cell (target cell) based on the measurement report and then initiates a handover procedure including signaling with the mobile terminal and the objective cell.

One of transmission events of the measurement report defined by 3GPP TS 36.331 V8.11.0 (2010-09), which is a 3GPP technical specification regarding Long Term Evolution (LTE)/Evolved UTRAN (E-UTRAN), will be introduced. The essential part of the transmission event defined as Event A3 (Neighbor becomes offset better than serving) in this technical specification is expressed by the following expression (1).

$$P_S + O_S < P_T + O_T \quad (1)$$

In the expression (1), $P_S$ denotes a result of measuring radio quality of a serving cell and $P_T$ denotes a result of measuring radio quality of a neighbor cell. In the case of LTE, $P_S$ and $P_T$ are downlink reference signal received power (RSRP) or reference signal received quality (RSRQ). RSRQ is a ratio of RSRP to total received power. Further, $O_S$ in the expression (1) denotes an offset value to the radio quality of the serving cell, and affects the radio quality of the downlink reference signal of the serving cell. Meanwhile, $O_T$ denotes an offset value to the radio quality of the neighbor cell, and affects the radio quality of the downlink reference signal of the neighbor cell. The neighbor list can hold a setting of offset $O_T$ that differs for each registered cell. The offset value $O_T$ is referred to as a cell individual offset (CIO).

When the operating condition of the expression (1) is set in the base station, the operating condition of the expression (1) is notified to the mobile terminal connected to the cell managed by the base station. When the results of measuring the radio quality of the serving cell and the radio quality of the neighbor cell satisfy the condition shown in the expression (1), the mobile terminal transmits a measurement report to the serving base station.

Further, the expression (1) may be rewritten into the following expressions (2) and (3). The parameter $TH_{HO}$ is called a handover threshold.

$$P_T - P_S > TH_{HO} \quad (2)$$

$$TH_{HO} = O_S - O_T \quad (3)$$

A technique for dynamically adjusting handover parameters such as the offset value Ot (CIO) stated above and Time to Trigger (TTT) is known. TTT is lag time from establishment of the condition for transmitting the measurement report such as the expressions (1) or (2) stated above to transmission of the measurement report. For example, when a period during which the condition of the expression (2) continues to be satisfied becomes longer than TTT, a mobile terminal sends a measurement report. Thus, as TTT becomes longer, the timing to start handover is delayed, and handover becomes difficult to occur.

For example, Patent literature 1 discloses reducing handover failures (i.e., Too Late Handover, Too Early Handover) by dynamically adjusting handover parameters (e.g., TTT, CIO and the like) based on measurement reports from mobile terminals. Further, Non-patent literature 1 discloses that a base station adjusts CIO for a neighbor cell included in a neighbor list when communication load of a cell increases, thereby prompts a mobile terminal to perform handover from the cell with large load to a neighbor cell. According to the technique disclosed by Non-patent literature 1, it is possible to perform load balancing between cells.

A handover control entity that has received a measurement report from a mobile terminal typically determines a target cell from "Listed Cells" among neighbor cells included in the measurement report. In this case, a mobile terminal cannot be handed over to "Detected Cells". Accordingly, if some neighbor cells have been omitted from the neighbor list, this may cause occurrence of handover failure or degradation of communication quality due to handover to an inappropriate cell.

Further, as stated above, the offset value Ot for each neighbor cell is notified to the mobile terminal using a neighbor list. In short, only neighbor cells registered in a neighbor list are able to notify the mobile terminal of the offset value Ot. Accordingly, if an important neighbor cell is not registered in a neighbor list, it is impossible to notify the mobile terminal of the offset value Ot regarding this important neighbor cell. In this case, since it is impossible to adjust a timing to perform handover of a mobile terminal by adjusting the offset value Ot, it is difficult to improve the handover success rate based on adjustment of the offset value Ot (e.g., Patent literature 1) or to achieve load balancing by performing handover of mobile terminals which is near a cell boundary to a neighbor cell (e.g., Non- patent literature 1) . This problem also occurs when the handover control entity of the serving cell can select a target cell from Detected Cells.

A offset value for each neighbor cell as stated above may also be set, separately from the CIO, for radio quality measured by a mobile terminal at the time of initiating communication. A cell to which a mobile terminal connects at the time of initiating communication is controlled by adjusting the offset value (qoffset), and it is thereby possible to control communication load of cells. However, as is similar to the CIO, a cell which can notify mobile terminals of the offset value (qoffset) is limited to neighbor cells registered in a neighbor list. Thus, it becomes difficult to achieve load balancing if an important neighbor cell is not registered in a neighbor list.

As will be clear from the description above, neighbor list optimization is important to secure high communication quality. In particular, since the number of cells that can be registered in a neighbor list is limited, it is necessary to preferentially register, in a neighbor list, important cells that are highly likely to contribute to an improvement of communication quality.

Conventionally, neighbor list optimization has been conducted by a professional engineer based on results of a running test or the like in a service area of a cellular communication system. However, in recent years, a technique of autonomously optimizing a neighbor list during an operation of a cellular communication system has been proposed (see Non-patent literature 2).

Non- patent literature 2 discloses preferentially registering, in a neighbor list, a neighbor cell which is frequently reported by measurement reports from mobile terminals, and a neighbor cell whose number of handover attempts of mobile terminals is large.

## Citation List

## Patent Literature

Patent literature 1: International Patent Publication No. WO 2010/002926

## Non Patent Literature

**Non-patent literature 1:** R. Kwan, et al., "On Mobility Load Balancing for LTE Systems", in Proc. IEEE 72nd Vehicular Technology Conference VTC2010, September, 2010
**Non-patent literature 2:** D. Soldani and I. Ore, "Self-optimizing Neighbor Cell List for UTRA FDD Networks Using Detected Set Reporting" in Proc. IEEE 65th Vehicular Technology Conference VTC2007, April, 2007, pp. 694-698

## Summary of Invention

## Technical Problem

The present inventors have found out that, in a heterogeneous network (HetNet) environment and in a situation where there are a large number of neighbor cells of more than an upper limit number that can be registered in a neighbor list, the technique disclosed in Non-patent literature 2 may not be able to sufficiently perform neighbor list optimization. The HetNet environment is an environment in which a plurality of different types of cells having different sizes in coverage (cell sizes) (e.g., a macro cell and a pico cell, a macro cell and a femto cell, or a pico cell and a femto cell) are arranged adjacent to each other. The neighbor arrangement of cells in the HetNet environment includes a hierarchized arrangement in which one cell with smaller cell size is completely included in the coverage of the other cell with large cell size. In the following description, this problem recognized by the present inventors will be described in detail.

Non- patent literature 2 only discloses selecting listed cells (i.e., cells to be registered in a neighbor list) from a plurality of neighbor cells using a common criteria for the plurality of neighbor cells (more specifically, the number of measurement reports, and the number of handover attempts) . However, in the HetNet environment including, for example, macro cells and pico cells, the number of measurement reports and the number of handover attempts regarding macro cells are typically larger than those of pico cells, which means it is difficult for pico cells to be registered in a neighbor list. Accordingly, selection of listed cells according to the common criteria may not be sufficient to optimize a neighbor list.

Further, the present inventors have studied the way to reduce handover failures using the technique disclosed in Patent literature 1 and reached a technique of preferentially registering, in a neighbor list, neighbor cells with large number or rate of handover failures. However, when register is performed according to this criteria in the HetNet environment, there may be a case in which a neighbor list is dominated by neighbor cells with large number of handover failures or high failure rate (i.e., mainly pico cells), and important neighbor cells with large number of handover attempts (i.e., mainly macro cells) are not registered in a neighbor list.

Furthermore, in order to efficiently use the technique disclosed in Non- patent literature 1, it is preferable to register neighbor cells arranged for load balancing (i.e., mainly pico cells) in the neighbor list. However, the method disclosed in Non- patent literature 2 for selecting cells to be registered in a neighbor list preferentially registers in the neighbor list neighbor cells that are likely to be selected as handover destination, i.e., neighbor cells with high radio quality, using common criteria for both a macro cell and a pico cell. Accordingly, there may be a case in which neighbor cells with high radio quality (i.e., mainly macro cells) are registered in a neighbor list and neighbor cells for load balancing (i.e., mainly pico cells) are not registered in a neighbor list.

The present invention has been made based on the aforementioned findings by the present inventors, and aims to provide a neighbor list optimization apparatus, a neighbor list generation apparatus, a base station apparatus, a neighbor list optimization method, and a program capable of optimizing a neighbor list suitable for the heterogeneous network (HetNet) environment.

## Solution to Problem

A first aspect according to the present invention includes a neighbor list optimization apparatus that performs optimization of a neighbor list wirelessly transmitted from a base station that manages an objective cell. The neighbor list optimization apparatus includes a cell selection unit that selects, based on cell types defined according to a difference in cell sizes, a plurality of registered cells to be registered in the neighbor list from a plurality of other cells than the objective cell.

A second aspect according to the present invention includes a neighbor list generation apparatus. The neighbor list generation apparatus is coupled to the neighbor list optimization apparatus according to the first aspect of the present invention stated above, and is configured to generate a neighbor list including information of the plurality of registered cells selected by the neighbor list optimization apparatus.

A third aspect according to the present invention includes a base station apparatus. The base station apparatus is coupled to the neighbor list generation apparatus according to the second aspect of the present invention stated above, and is configured to wirelessly transmit the neighbor list including the information of the plurality of registered cells.

A fourth aspect according to the present invention includes a neighbor list optimization method that performs optimization of a neighbor list wirelessly transmitted from a base station that manages an objective cell. The method includes a step of selecting, based on cell types defined according to a difference in cell sizes, a plurality of registered cells to be registered in the neighbor list from a plurality of other cells than the objective cell.

A fifth aspect according to the present invention includes a computer program. This program is read into a computer to be executed by the computer, thereby causing the computer to execute the neighbor list optimization method in the fourth aspect of the present invention stated above.

## Advantageous Effects of Invention

According to the aspects of the present invention stated above, it is possible to provide a neighbor list optimization apparatus, a neighbor list generation apparatus, a base station apparatus, a neighbor list optimization method, and a program that are capable of performing neighbor list optimization suitable for a heterogeneous network (HetNet) environment in which a plurality of different types of cells having different sizes in coverage (cell sizes) are adjacently arranged.

## Brief Description of Drawings

Fig. 1 is a diagram showing a configuration example of a network including a handover optimization system according to a first embodiment of the present invention;

Fig. 2A is a table showing a specific example of a cell selection index (CSI) supplied to a neighbor list optimization unit shown in Fig. 1;

Fig. 2B is a table showing a specific example of the cell selection index (CSI) supplied to the neighbor list optimization unit shown in Fig. 1;

Fig. 2C is a table showing a specific example of the cell selection index (CSI) supplied to the neighbor list optimization unit shown in Fig. 1;

Fig. 3 is a diagram showing a configuration example of the network including the handover optimization system according to the first embodiment of the present invention;

Fig. 4 is a diagram showing a configuration example of the network including the handover optimization system according to the first embodiment of the present invention;

Fig. 5 is a diagram showing a configuration example of the network including the handover optimization system according to the first embodiment of the present invention;

Fig. 6 is a flowchart showing a specific example of a whole procedure for processing of updating a neighbor list performed by the handover optimization system shown in Fig. 1;

Fig. 7 is a flowchart showing a first example of a procedure for selecting registered cells in the neighbor list according to the first embodiment of the present invention;

Fig. 8 is a flowchart showing a second example of a procedure for selecting registered cells in the neighbor list according to the first embodiment of the present invention;

Fig. 9 is a flowchart showing a third example of a procedure for selecting registered cells in the neighbor list according to the first embodiment of the present invention;

Fig. 10 is a flowchart showing a fourth example of a procedure for selecting registered cells in the neighbor list according to the first embodiment of the present invention;

Fig. 11 is a flowchart showing a fifth example of a procedure for selecting registered cells in the neighbor list according to the first embodiment of the present invention;

Fig. 12 is a diagram showing a configuration example of a network including a handover optimization system according to a reference example;

Fig. 13 is a flowchart showing a specific example of a whole procedure for processing of updating a neighbor list performed by the handover optimization system shown in Fig. 12;

Fig. 14 is a flowchart showing a first example of a procedure for selecting registered cells in the neighbor list according to the reference example;

Fig. 15 is a flowchart showing a second example of a procedure for selecting registered cells in the neighbor list according to the reference example; and

Fig. 16 is a flowchart showing a third example of a procedure for selecting registered cells in the neighbor list according to the reference example.

**Description of Embodiments**

In the following description, specific embodiments of the present invention will be described in detail with reference to the drawings. Throughout the drawings, the same or corresponding components are denoted by the same reference symbols, and overlapping description is omitted as necessary for the sake of clarification of description.

<First embodiment>

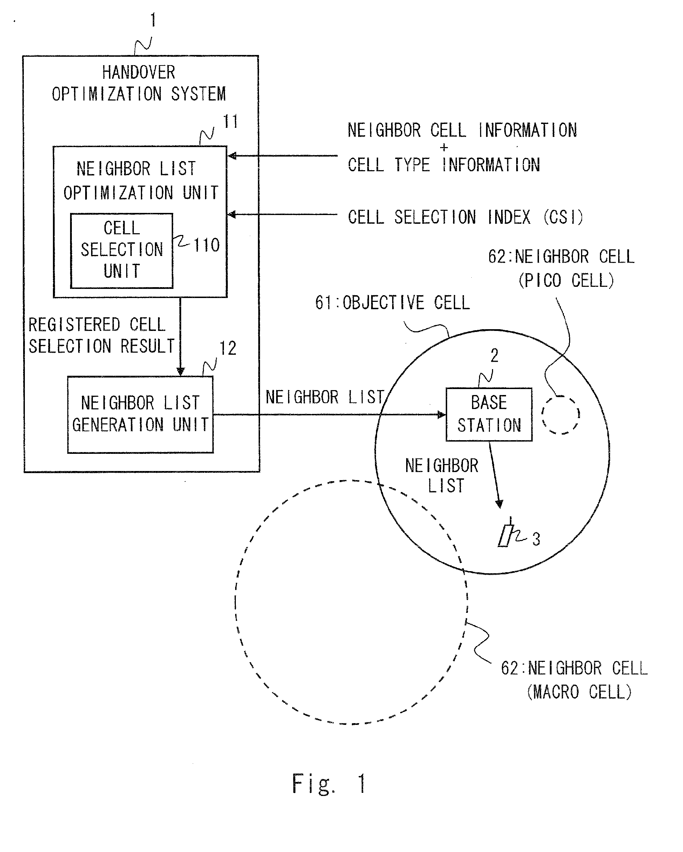

Fig. 1 shows a configuration example of a network including a handover optimization system 1 according to this embodiment. The handover optimization system 1 performs processing of updating a neighbor list regarding an objective cell 61. The neighbor list of the objective cell 61 is sent from a base station 2 that manages the objective cell 61 using a radio channel that can be received by a mobile terminal (hereinafter referred to as a UE: User Equipment) 3.

The handover optimization system 1 includes a neighbor list optimization unit 11 and a neighbor list generation unit 12. The neighbor list optimization unit 11 selects, based on cell types defined according to a difference in cell sizes, a plurality of registered cells from a plurality of neighbor cells 62 that are adjacent to the objective cell 61. This processing of selecting the registered cells is performed by a cell selection unit 110. According to such selection of registered cells, the neighbor list optimization unit 11 performs optimization of the neighbor list regarding the objective cell 61. The neighbor list generation unit 12 generates a neighbor list in which information of the plurality of registered cells selected by the neighbor list optimization unit 11 is described, and supplies the neighbor list to the base station 2.

In the example shown in Fig. 1, the objective cell 61 is a macro cell, and only two neighbor cells 62 including one macro cell and one pico cell are shown. However, the objective cell 61 may be other cells than the macro cell. Further, the objective cell 61 may have a larger number of neighbor cells. The processing of selecting registered cells by the neighbor list optimization unit 11 is especially effective when the total number of neighbor cells 62 is larger than a maximum registrable number NCLmax (e.g., 32 in LTE) in the neighbor list.

The cell selection unit 110 uses neighbor cell information (e.g., cell IDs) regarding the plurality of neighbor cells 62 to select registered cells. The neighbor cell information may be supplied to the neighbor list optimization unit 11 through various paths. For example, the neighbor cell information can be acquired by referring to measurement reports (MR) generated by the UEs 3 or MR tabulated information of measurement reports tabulated by the base station 2 or the like. Since each measurement report includes results of measuring radio quality of the neighbor cells 62 that are detected by the UE 3, it is possible to specify the neighbor cells 62. By acquiring the neighbor cell information from the measurement reports or the tabulated information of the measurement reports, it is possible to obtain the information regarding the neighbor cells even when the objective cell 61 and the neighbor cells 62 are managed by different element management systems (EMSs) or network management systems (NMSs) that are under the control of a communication carrier and it is impossible to share information between EMSs, between an EMS and an NMS, or between NMSs.

Alternatively, the neighbor cell information may be acquired from network design information held by the base station 2 or an EMS or an NMS that manages the base station 2. The network design information includes cell layout information created by an operator of a communication carrier or the like. By acquiring the neighbor cell information from the network design information, it is possible to avoid the problem raised when measurement reports are used, i.e., information of only a part of the neighbor cells 62 can be obtained from measurement reports from the UEs 3 since the number of UEs 3 connected to the objective cell 61 is small. The neighbor cell information may be acquired by both of the network design information and the measurement reports from the UEs 3 or the tabulated information of the measurement reports. Accordingly, it is possible to obtain comprehensive information of the neighbor cells 62.

Further, as described above, the cell selection unit 110 selects registered cells based on the cell types defined according to a difference in cell sizes. Accordingly, the cell selection unit 110 uses cell type information regarding the neighbor cells 62 to select registered cells. It is only required that the cell type information is able to identify the difference of cell sizes of the neighbor cells 62. For example, the cell type information may be information that directly indicates cell size. Alternatively, the cell type information may be an identifier that indicates which one of attributes divided according to cell size, such as a macro cell, a micro cell, a pico cell, and a femto cell, the neighbor cell belongs to. Alternatively, the cell type information may be information that indicates a transmission power level of a radio signal (e.g., a pilot signal, a downlink reference signal) from a base station that manages each neighbor cell 62. Further alternatively, the cell type information may be information indicating intended purpose of a cell, e.g., information which can identify whether it is a normal cell or a cell smaller than the normal cell arranged for load balancing.

The cell type information can be supplied to the neighbor list optimization unit 11 through various paths. For example, the neighbor list optimization unit 11 may acquire the cell type information from a measurement report generated by the UE 3 (or MR tabulated information) or network design information, or the combination thereof, as is similar to the neighbor cell information stated above. In the case of acquiring the cell type information from a measurement report of the UE 3 or MR tabulated information, the cell type information may be included in a transmission signal of each base station that manages the neighbor cell 62. Alternatively, the cell type information may be acquired from a base station that manages a neighbor cell included in the measurement report of the UE 3.

Further, the cell selection unit 110 uses a cell selection index (CSI) in order to select registered cells from the neighbor cells 62. A typical specific example of the cell selection index is, as disclosed in Non- patent literature 2, "the number of detections by the UEs 3 (the number of measurement reports) " and "the number of handover (HO) attempts". "The number of HO attempts" means the number of attempts of outbound handover from the objective cell 61 to the neighbor cell 62.

The cell selection index may include "the number of HO failures", "a HO failure rate", or "an occupancy rate of the number of failures". "The number of HO failures" means the number of failures of outbound handover from the objective cell 61 to the neighbor cell 62. Further, "the HO failure rate" means a ratio of the number of failures to the number of attempts of outbound handover from the objective cell 61 to the neighbor cell 62. Further, "the occupancy rate of the number of failures" means a proportion of the number of failures of outbound handover from the objective cell 61 to the neighbor cell 62 in the total number of failures of outbound handover from the objective cell 61. The cell selection unit 110 may preferentially select, as a registered cell, the neighbor cell 62 with large number of HO failures, high HO failure rate, or high occupancy rate of the number of failures. Accordingly, it is possible to adjust handover parameters such as CIOs for these cells, and to suppress occurrence of handover to a neighbor cell in which handover failure is expected. In short, it is possible to reduce handover failures.

In the following description, two examples of selecting registered cells based on cell types will be described.

(First example of selecting registered cells based on cell types)

The cell selection unit 110 uses different criteria to select registered cells for different cell types. For example, for neighbor macro cells, a first criterion in which a cell with large first index (e.g., at least one of the number of detections by the UEs 3 and the number of HO attempts) is preferentially selected as a registered cell is employed. Meanwhile, for other types of neighbor cells (e.g., neighbor pico cells), a second criterion in which a cell with large second index (e.g., the number of HO failures, the HO failure rate, or the occupancy rate of the number of failures) is preferentially selected as a registered cell is employed. The first index and the second index may each include a plurality of indices. In this case, it is only required that the combination of the indices for macro cells and the indices for other types of neighbor cells are different. Alternatively, while the cell selection unit 110 uses the same index regardless of the cell type, a threshold compared to the index when registered cells are selected may be changed depending on the cell types. For example, when "the number of detections by the UE 3" is used as the same index, a high threshold may be employed for the neighbor macro cells and a threshold which is lower than that of the macro cells may be employed for other neighbor cells (e.g., neighbor pico cells).

According to the method of using a common criterion without taking into consideration the cell types as disclosed in Non-patent literature 2, only a certain type of cells may be selected as registered cells, and other types of cells may be hardly selected. However, such problem can be evaded by changing the criterion to select registered cells depending on the cell types.

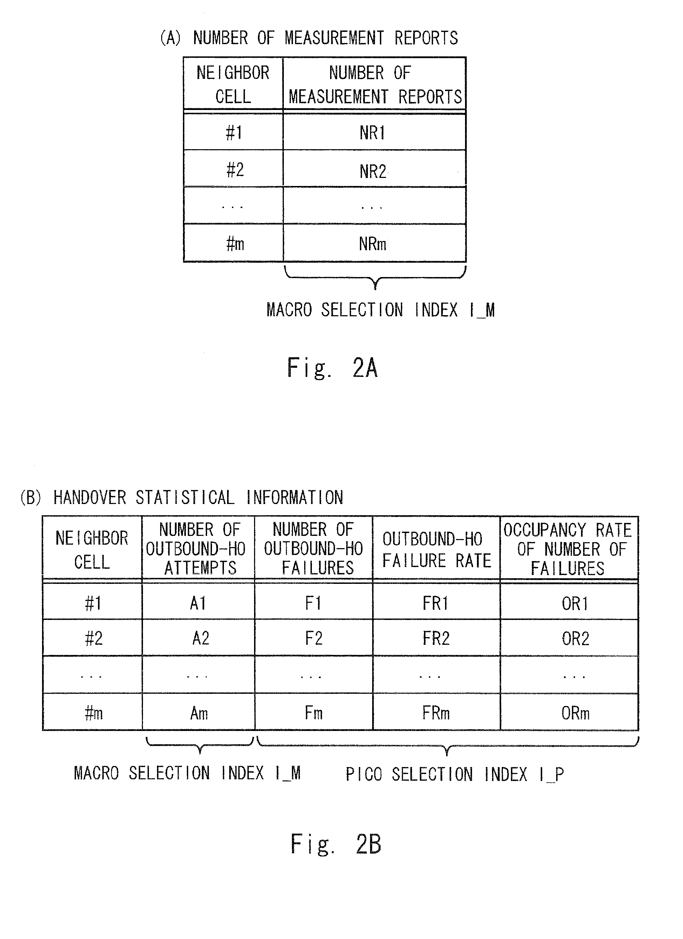

With reference to Figs. 2A to 2C, examples of cell selection indices will be described in more detail. Figs. 2A to 2C are tables showing specific examples of the cell selection indices. Fig. 2A shows results of tabulating the number of measurement reports from the UEs 3 for each neighbor cell. The tabulated results of the number of measurement reports may be created by the base station 2, a handover control entity of the neighbor cell 62 (a radio network controller (RNC) etc.), or an EMS or an NMS that manages the base station 2 and may be supplied to the neighbor list optimization unit 11. Alternatively, the tabulated results of the number of measurement reports may be created by the handover optimization system 1 collecting the measurement reports from the UE 3.

A large number of measurement reports means that a neighbor cell is frequently observed (detected) by the UEs 3 that connect to the objective cell 61, and means a neighbor cell is highly likely to be the target of handover from the objective cell 61. Typically, such a neighbor cell often has a large coverage. Accordingly, the number of measurement reports may be employed as a selection index for cells having relatively large coverage. For example, when being applied to the HetNet environment including macro cells and pico cells, the number of measurement reports may be employed as a selection index for macro cell (macro selection index I_M).

Fig. 2B shows statistical information regarding handover. More specifically, Fig. 2B shows the number of attempts of Outbound HO from the objective cell 61 to each neighbor cell 62 (second row), the number of failures of Outbound HO to each neighbor cell 62 (third row), the failure rate of Outbound HO to each neighbor cell 62 (fourth row), and the occupancy rate of the number of failures of Outbound HO to each neighbor cell 62 (fifth row). The statistical information regarding handover may be created by a control entity (e.g., base station, RNC) that controls handover of the objective cell 61 and the neighbor cell 62, or an EMS or an NMS and may be supplied to the neighbor list optimization unit 11.

When being applied to the HetNet environment including macro cells and pico cells, the number of attempts of Outbound HO to the neighbor cell 62 may be employed as a selection index for macro cell (macro selection index I_M). This is because, a large number of attempts of Outbound HO means that a neighbor cell is highly likely to be the target of handover from the objective cell 61, and typically such a neighbor cell is often a macro cell. Meanwhile, other three indices shown in Fig. 2B may be employed as a selection index for pico cell (pico selection index I_P). Handover failures can be reduced by preferentially registering neighbor pico cells with large number or rate of handover failures in a neighbor list and adjusting CIOs for these neighbor pico cells to large values.

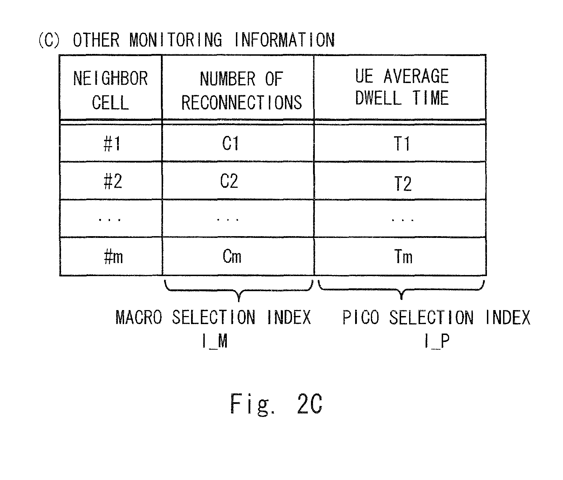

Fig. 2C shows other monitoring information regarding the neighbor cells 62. More specifically, Fig. 2C shows the number of reconnections of UEs to each neighbor cell 62 (second row) and the average dwell time of UEs in each neighbor cell 62 (third row). The monitoring information may be created by a base station that manages the neighbor cell 62, a node that manages the base station, or an EMS or an NMS and may be supplied to the neighbor list optimization unit 11.

When being applied to the HetNet environment including macro cells and pico cells, the number of reconnections of UEs to the neighbor cell 62 may be employed as a selection index for macro cell (macro selection index I_M). This is because, that large number of reconnections of UEs means that a neighbor cell is highly likely to be the target of handover from the objective cell 61, and typically such a neighbor cell is often a macro cell. Meanwhile, the average dwell time of UEs in the neighbor cell 62 may be employed as a selection index for pico cell (pico selection index I_P). Even when the UE 3 performs handover to the neighbor cell 62 in which average dwell time is short, UE 3 is highly likely to immediately return to the objective cell 61. In short, there is a high possibility that handover repeating (ping-pong phenomenon) occurs. Otherwise, the UE 3 is highly likely to immediately perform handover to a cell different from the objective cell 61 after once being handed over to the neighbor cell 62. Typically, such phenomena often occur in pico cells with small coverage. Therefore, by preferentially registering neighbor pico cells in which average dwell time of UEs is short in a neighbor list and adjusting CIOs for these neighbor pico cells to large values, handover to these neighbor pico cells can be suppressed.

(Second example of selecting registered cells based on cell types)

A second example of selecting registered cells based on cell types will be described. The cell selection unit 110 reserves a part of the maximum registrable number NCLmax in a neighbor list as a registrable number part (reserved number) for at least one cell type (e.g., pico cell). In other words, the cell selection unit 110 sets a registration upper limit number (i.e., a value obtained by subtracting a reserved number from the maximum registrable number NCLmax in the neighbor list) to at least one cell type (e.g., macro cell). Alternatively, the cell selection unit 110 may set a registrable number for each cell type by dividing the maximum registrable number NCLmax in the neighbor list, and may select registered cells within a range of each registrable number for each cell type. Accordingly, even when registered cells are selected by the same criterion regardless of cell types, it is possible to definitely register cells of a plurality of cell types in a neighbor list.

Further, the first and second examples of selecting registered cells stated above may be used in combination. By combining them, it is possible to employ selection criteria adapted to respective cell types, and to definitely register cells of a plurality of cell types in a neighbor list.

As stated above, the neighbor list optimization unit 11 according to this embodiment selects, based on the cell types that are defined according to a difference in cell sizes, registered cells to be registered in a neighbor list from the neighbor cells 62. In this way, this embodiment is possible to perform neighbor list optimization suitable for HetNet environment.

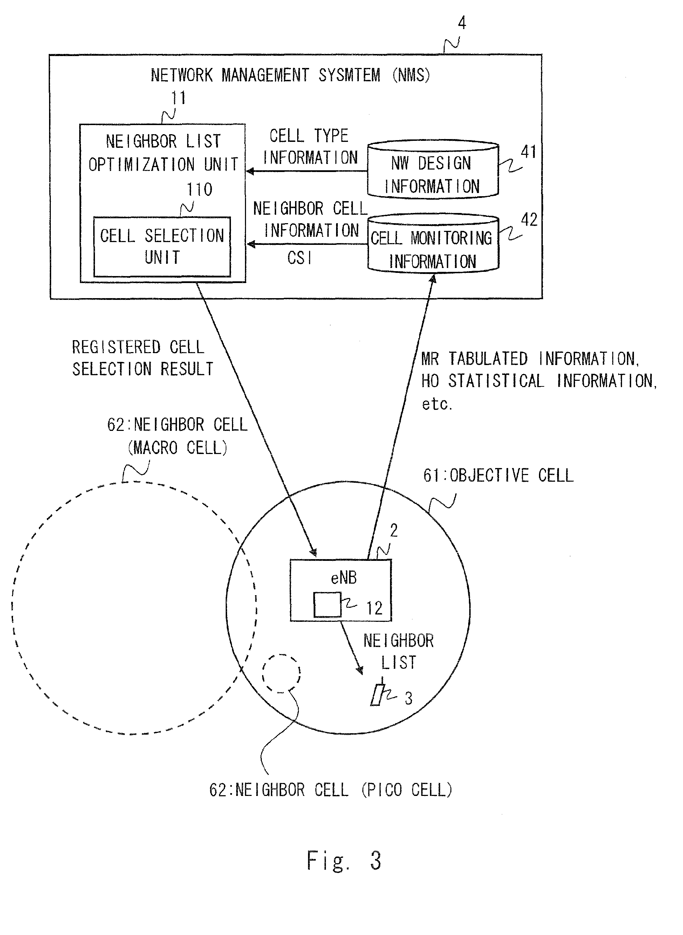

Incidentally, the arrangement of the neighbor list optimization unit 11 and the neighbor list generation unit 12 is appropriately determined based on the design concept of the network architecture. For example, when this embodiment is applied to an evolved packet system (EPS), as shown in Fig. 3, the neighbor list optimization unit 11 may be arranged in an NMS 4 and the neighbor list generation unit 12 may be arranged in the base station (evolved NodeB (eNB) ) 2 having a handover control function. In the example shown in Fig. 3, the NMS 4 supplies cell type information that is contained in network design information 41 to the neighbor list optimization unit 11. Further, in the example shown in Fig. 3, the NMS 4 receives measurement report (MR) tabulated information and handover (HO) statistical information from the base station 2 and stores the  information as cell monitoring information 42. The NMS 4 supplies the neighbor cell information and the cell selection index (CSI) contained in the cell monitoring information 42 to the neighbor list optimization unit 11.

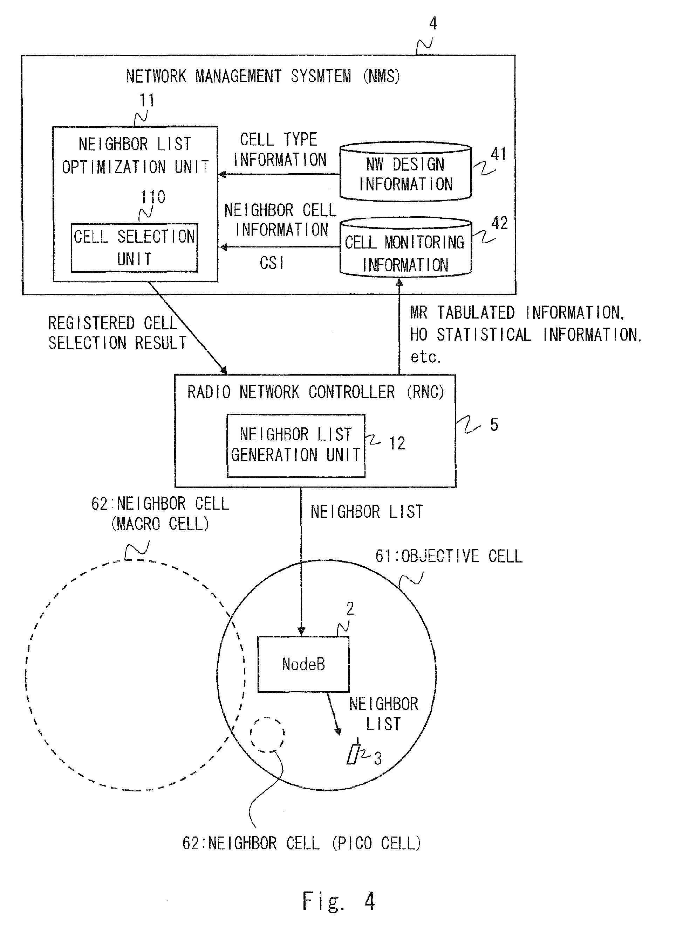

Further, when this embodiment is applied to a universal mobile telecommunications system (UMTS), as shown in Fig. 4, the neighbor list optimization unit 11 may be arranged in the NMS 4 and the neighbor list generation unit 12 may be arranged in an RNC 5 having a handover control function.

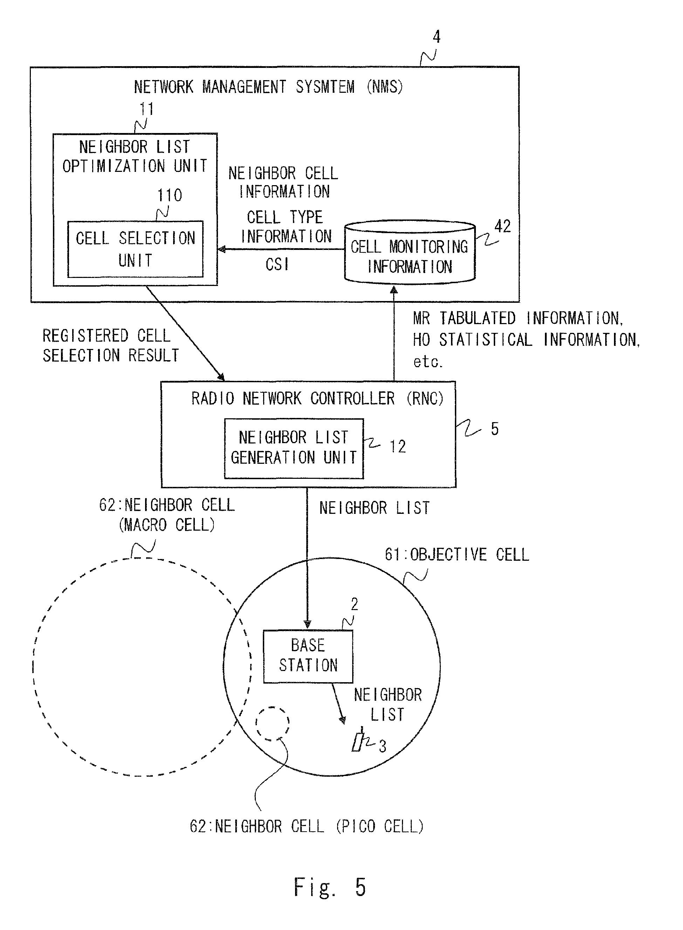

Further, as stated above, the cell type information may be acquired from the measurement report of the UE 3. In this case, the configuration as shown in Fig. 5 may be employed as a variant example of Fig. 4. Specifically, the NMS 4 may supply the neighbor cell information, the cell type information, and the cell selection index (CSI) contained in the cell monitoring information 42 to the neighbor list optimization unit 11.

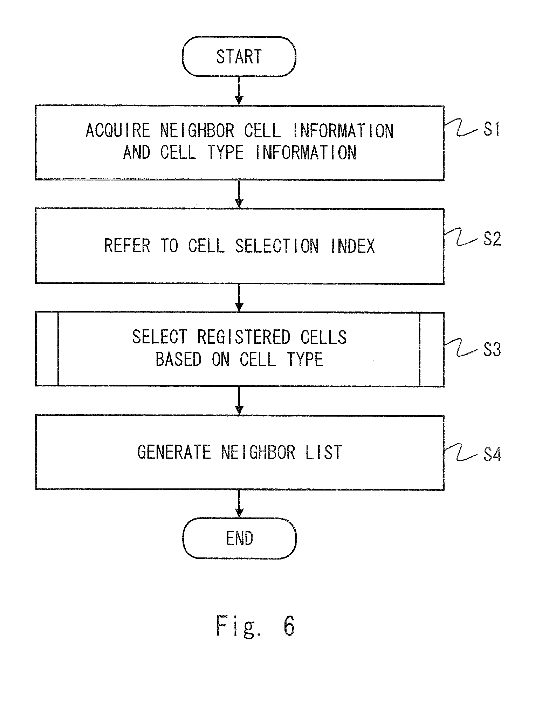

In the following description, an operation of updating a neighbor cell list by the handover optimization system 1, in particular, a specific example of the operation of selecting registered cells by the neighbor list optimization unit 11 will be described in detail. Fig. 6 is a flowchart showing a whole procedure of updating a neighbor cell list by the handover optimization system 1. In Step S1, the neighbor list optimization unit 11 acquires the neighbor cell information and the cell type information thereof. In Step S2, the neighbor list optimization unit 11 refers to the cell selection index (CSI). In Step S3, the neighbor list optimization unit 11 (i.e., the cell selection unit 110) selects registered cells based on the cell types. The selection of registered cells in Step S3 may be performed by any one of the two examples stated above or the combination thereof. In Step S4, the neighbor list generation unit 12 generates a neighbor list including information of the plurality of registered cells selected in the Step S3.

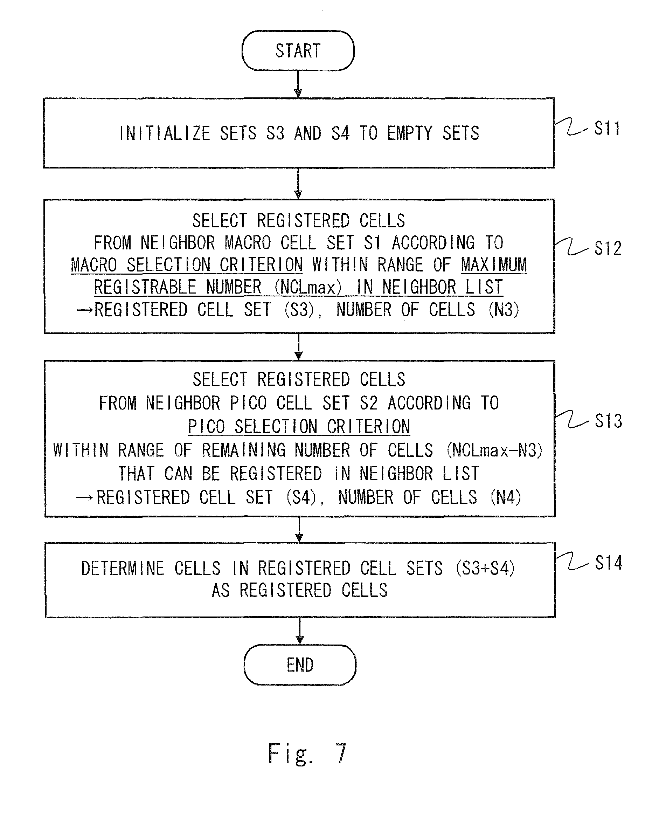

In the following description, with reference to flowcharts in Figs. 7 to 11, five specific examples of the procedure for selecting registered cells in the Step S3 shown in Fig. 6 will be described in more detail. While described in Figs. 7 to 11 is a case in which the plurality of neighbor cells 62 include a macro cell and a pico cell, they may be replaced with the combination of other cells having different cell sizes. Further, the procedures shown in Figs. 7 to 11 may be applied to an environment where there are a neighbor cell group with large coverage including for example a macro cell and a micro cell and a neighbor cell group with small coverage including for example a pico cell and a femto cell.

The procedure shown in Fig. 7 corresponds to the first example described above. That is, the feature of the procedure shown in Fig. 7 is to use different registered-cell-selection criteria for different cell types. In Step S11, the cell selection unit 110 initializes sets S3 and S4 as empty sets. The sets S3 and S4 may be defined, for example, as array variables in a computer program.

In Step S12, the cell selection unit 110 selects registered cells from a neighbor macro cell set S1 among the neighbor cells 62, according to a macro cell selection criterion, within a range of the maximum registrable number NCLmax in the neighbor list. The macro cell selection criterion may be, for example, a criterion to perform any threshold comparison of the macro selection index I_M stated above. The neighbor macro cells selected in the Step S12 are recorded in a registered cell set S3. Further, the number of neighbor macro cells selected in the Step S12 is denoted by N3.

In Step S 13, the cell selection unit 110 selects registered cells from a neighbor pico cell set S2 among the neighbor cells 62, according to a pico cell selection criterion, within a range of the remaining number of cells that can be registered in the neighbor list  (i.e., NCLmax-N3). The pico cell selection criterion may be, for example, a criterion to perform any threshold comparison of the pico selection index I_P stated above. The neighbor pico cells selected in the Step S 13 are recorded in a registered cell set S4. Further, the number of neighbor pico cells selected in the Step S 13 is denoted by N4.

In Step S14, the cell selection unit 110 determines the cells included in the registered cell sets S3 and S4 as the registered cells. When the number of cells included in the registered cell sets S3 and S4 is below the maximum registrable number NCLmax, the remaining neighbor cells 62 that have not been selected may further be selected as the registered cells. Further, registered cells may be selected from the neighbor pico cells prior to the neighbor macro cells. However, in an environment in which the number of neighbor pico cells is larger than the maximum registrable number NCLmax, the selection is preferably performed in the order illustrated in Fig. 7.

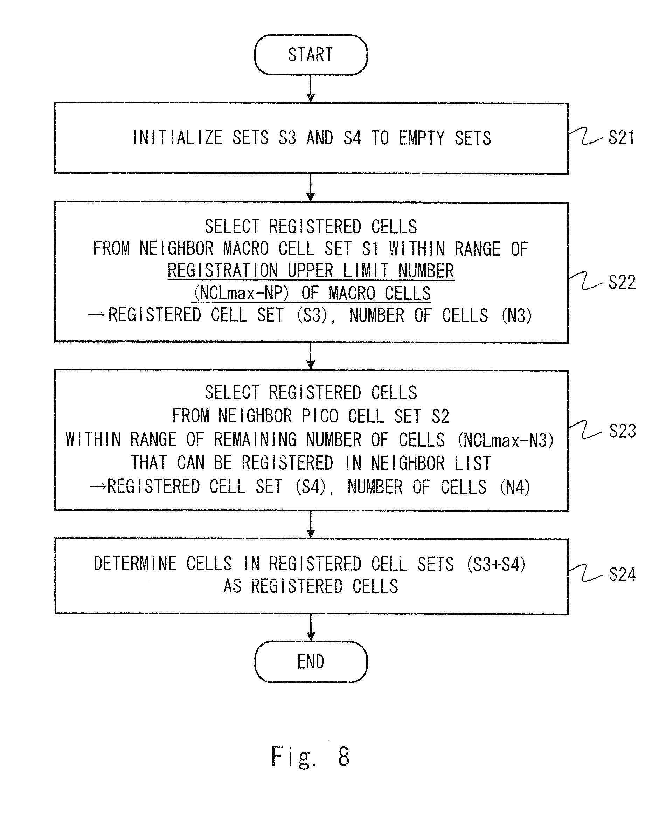

The procedure shown in Fig. 8 corresponds to the second example stated above. In summary, the procedure shown in Fig. 8 reserves a part of the maximum registrable number NCLmax in the neighbor list as a registrable number (reserved number) for at least one cell type (e.g., pico cell). In the example shown in Fig. 8, the reserved number for pico cells is denoted by NP. Step S21 shown in Fig. 8 is similar to the Step S11 shown in Fig. 7.

In Step S22, the cell selection unit 110 selects registered cells from the neighbor macro cell set S1 within a range of the registration upper limit number (NCLmax-NP) of macro cells. The neighbor macro cells selected in the Step S22 are recorded in the registered cell set S3. Further, the number of neighbor macro cells selected in the Step S22 is denoted by N3.

In Step S23, the cell selection unit 110 selects registered cells from the neighbor pico cell set S2 within a range of the remaining number of cells (NCLmax- N3) that can be registered in the neighbor list. The neighbor pico cells selected in the Step S23 are recorded in the registered cell set S4. Further, the number of neighbor pico cells selected in the Step S23 is denoted by N4.

In Step S24, the cell selection unit 110 determines the cells included in the registered cell sets S3 and S4 as the registered cells. When the number of cells included in the registered cell sets S3 and S4 is below the maximum registrable number NCLmax, the cell selection unit 710 may select the remaining neighbor cells 62 that have not been selected as the registered cells. Further, the cell selection unit may select registered cells from the neighbor pico cells prior to the neighbor macro cells. In this case, the cell selection unit 110 may select registered cells from the neighbor pico cell set S2 within a range of the reserved number NP for pico cells.

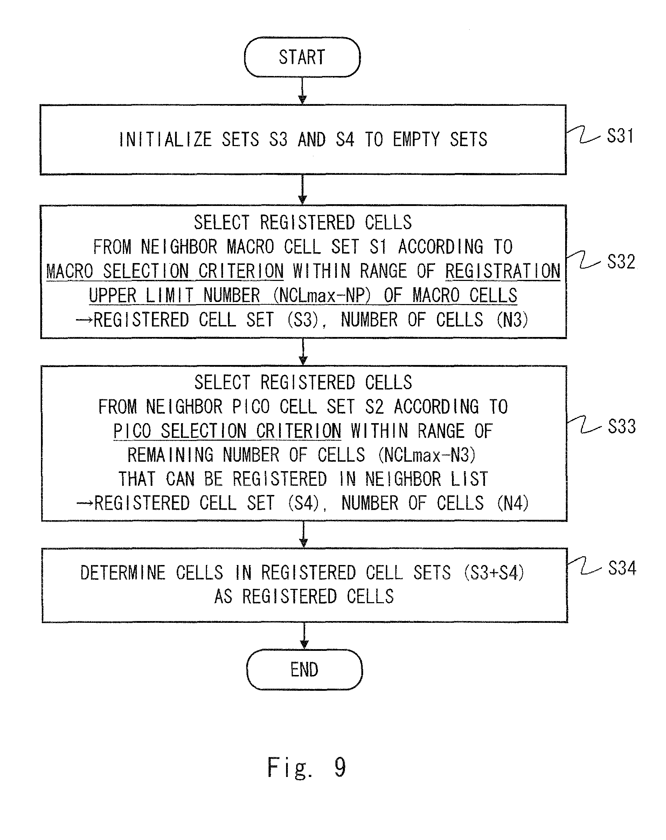

The procedure shown in Fig. 9 corresponds to the combination of the first and second examples stated above. In summary, the procedure shown in Fig. 8 uses different registered-cell-selection criteria for different cell types and reserves a part of the maximum registrable number NCLmax in the neighbor list as a registrable number (reserved number) for at least one cell type (e.g., pico cell). Also in the example shown in Fig. 9, the reserved number for pico cells is denoted by NP. Step S31 shown in Fig. 9 is similar to Step S11 shown in Fig. 7.

In Step S32, the cell selection unit 110 selects registered cells from the neighbor macro cell set S1 according to the macro cell selection criterion within a range of the registration upper limit number (NCLmax- NP) of macro cells.

In Step S33, the cell selection unit 110 selects registered cells from the neighbor pico cell set S2 according to the pico cell selection criterion within a range of the remaining number of cells (NCLmax- N3) that can be registered in the neighbor list.

Step S34 is similar to the Step S24 shown in Fig. 8.

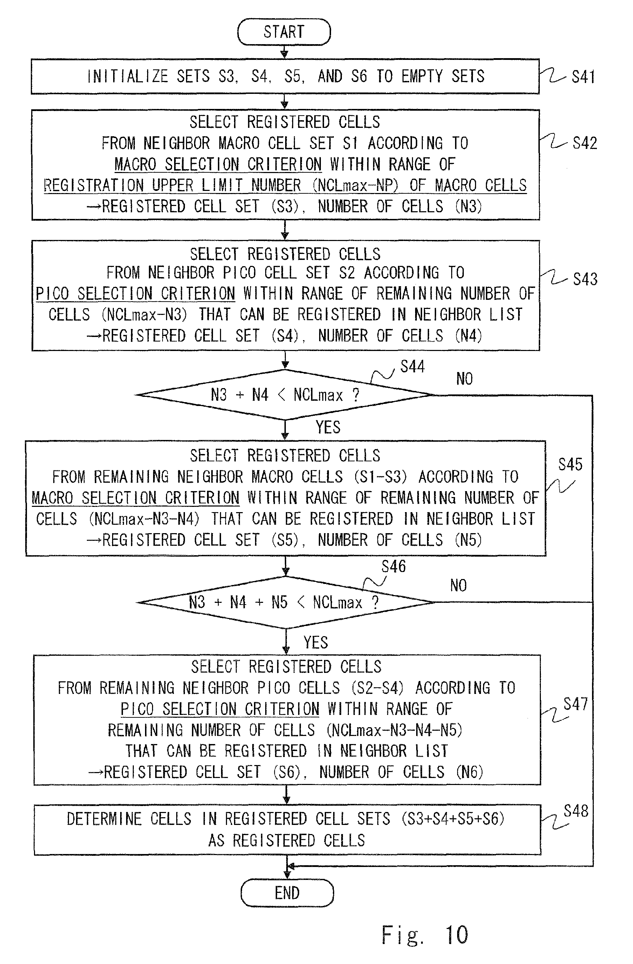

The procedure shown in Fig. 10 is a variation of the procedure shown in Fig. 9. In the procedure shown in Fig. 9, there may be a case in which the number of registered cells does not reach the maximum registrable number NCLmax in the neighbor list due to any of the reasons that the number of neighbor macro cells is smaller than the registration upper limit number (NCLmax- NP), the number of neighbor pico cells is smaller than the reserved number (NP), or both of the number of neighbor macro cells and the number of neighbor pico cells are small. The procedure shown in Fig. 10 shows an example in which further cell selection is performed when the total number of cells included in both the registered cell sets S3 and S4 is below the maximum registrable number NCLmax.

In Step S41 shown in Fig. 10, the cell selection unit 110 initializes sets S3 to S6 as empty sets. Steps S42 and S43 shown in Fig. 10 are similar to the Steps S32 and S33 shown in Fig. 9.

In Step S44, it is determined whether the total number of cells (N3+N4) included in both the registered cell sets S3 and S4 is below the maximum registrable number NCLmax. When N3+N4 is smaller than NCLmax (YES in Step S44), the cell selection unit 110 selects registered cells from the remaining neighbor macro cells (S1- S3) according to the macro cell selection criterion within a range of the remaining number of cells (NCLmax- N3- N4) that can be registered in the neighbor list (Step S45) . In the macro cell selection criterion in Step S45, the threshold may be changed to facilitate the selection of the registered cells compared to the criterion in the Step S42. The neighbor macro cells selected in the Step S45 are recorded in a registered cell set S5. Further, the number of neighbor macro cells selected in the Step S45 is denoted by N5.

In Step S46, it is determined whether the number of cells (N3+N4+N5) included in the registered cell sets S3 to S5 is below the maximum registrable number NCLmax. When N3+N4+N5 is smaller than NCLmax (YES in Step S46), registered cells are selected from the remaining neighbor pico cells (S2- S4) according to the pico cell selection criterion within a range of the remaining number of cells (NCLmax- N3- N4- N5) that can be registered in the neighbor list (Step S47) . In the pico cell selection criterion in Step S47, the threshold may be changed to facilitate the selection of the registered cells compared to the criterion in the Step S43. The neighbor pico cells selected in the Step S47 are recorded in a registered cell set S6. Further, the number of neighbor pico cells selected in the Step S47 is denoted by N6.

In Step S48, the cell selection unit 110 determines the cells included in the registered cell sets S3 to S6 as registered cells.

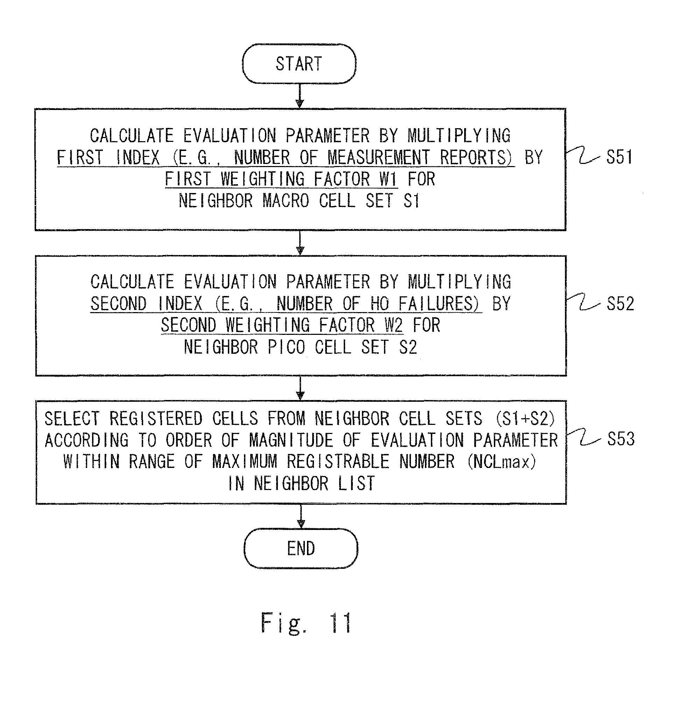

In the procedure shown in Fig. 11, a common index (referred to as an evaluation parameter) which does not depend on the cell type is used to select registered cells. However, the procedure shown in Fig. 11 takes into consideration the difference in cell types by differentiating the way of obtaining the evaluation parameter between macro cells and pico cells.

In Step S51, the cell selection unit 110 calculates the evaluation parameter by multiplying the first index (e.g., the number of measurement reports from the UEs 3) by a first weighting factor W1 for each cell included in the neighbor macro cell set S1.

In Step S52, the cell selection unit 110 calculates the evaluation parameter by multiplying the second index (e.g., the number of HO failures) by a second weighting factor W2 for each cell included in the neighbor pico cell set S2.

In Step S53, the cell selection unit 110 selects registered cells from the neighbor cell sets (S1+S2) according to the order of the magnitude of the evaluation parameter within a range of the maximum registrable number NCLmax in the neighbor list.

<Other embodiments>

The cell selection indices (CSIs) stated in the first embodiment are merely an example. Further, a plurality of indices may be used in combination. For example, regarding neighbor pico cells, such a selection criterion may be employed in which cells with high HO failure rate are selected from cells of which the number of measurement reports exceeds a threshold.

Further, instead of determining all of the registered cells in the neighbor list by dynamic cell selection by the neighbor list optimization unit 11, a part of registered cells may be statically registered in the neighbor list. In this case, dynamic cell selection by the neighbor list optimization unit 11 may be performed up to a number obtained by subtracting the number of cells that are statically registered from the maximum registrable number NCLmax in the neighbor list.

Further, although the first embodiment describes the objective cell 61 and the neighbor cells 62 adjacent to the objective cell 61, the neighbor cells 62 are only necessary to be any other cells than the objective cell 61. The other cells include a cell whose coverage partially overlaps the coverage of the objective cell 62, and a cell whose coverage is completely included in the coverage of the objective cell 62. Further, although coverage- overlap relation with the objective cell 62 is not clear, a cell detected by the UE 3, which is connects to the objective cell 62, are included in the other cells stated above.

Furthermore, although the first embodiment describes the case of always executing a selection of registered cells based on the cell type, the cell selection based on the cell type may be executed only when communication load of the objective cell 61 exceeds a predetermined threshold. When load balancing of the objective cell 61 is required, it is effective that cells which are placed for load balancing, such as pico cells, are selected as the registered cells. According to the variation stated in this example, when communication load of the objective cell 61 is large, it is possible to make the cells placed for load balancing, such as pico cells, favorably selected as registered cells among the neighbor cells. Meanwhile, when communication load of the objective cell 61 is small and load balancing is not required, selection of registered cells based on the cell type is not performed. Thus, it is possible to make macro cells, with large number of measurement reports or large number of HO attempts, be favorably selected as registered cells from the neighbor cells, thereby preferentially improving HO quality of macro cells.

The processing of selecting registered cells by the cell selection unit 110 stated in the first embodiment may be achieved using a semiconductor processing device such as an application specific integrated circuit (ASIC), a digital signal processor (DSP). Further, the processing of selecting registered cells by the cell selection unit 110 may be achieved by causing a computer such as a microprocessor to execute a program. More specifically, a program including instructions to cause a computer to execute the algorithm shown in any one of Figs. 7 to 11 may be created and supplied to the computer.

The program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), CD-ROM (Read Only Memory), CD-R, CD-R/W, and semiconductor memories (such as mask ROM, PROM (Programmable ROM), EPROM (Erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

Note that the present invention is not limited to the above embodiment, but can be modified in various ways without departing from the gist of the present invention already described.

<Reference example 1>

Described in the first embodiment stated above is an example of using "the number of HO failures", "the HO failure rate", or "the occupancy rate of the number of failures" of outbound HO from the objective cell 61 to the neighbor cell 62 as the cell selection index. Non-patent literature 2 does not disclose selecting registered cells using the criterion to preferentially select cells with relatively large number or high rate of outbound handover failures from the objective cell 61 to the neighbor cell 62 as stated above. Accordingly, there is described a reference example that performs selection of registered cells using the number of failures or the failure rate of outbound handover to the neighbor cell 62 as an index without necessitating consideration of the cell type defined according to a difference in cell sizes.

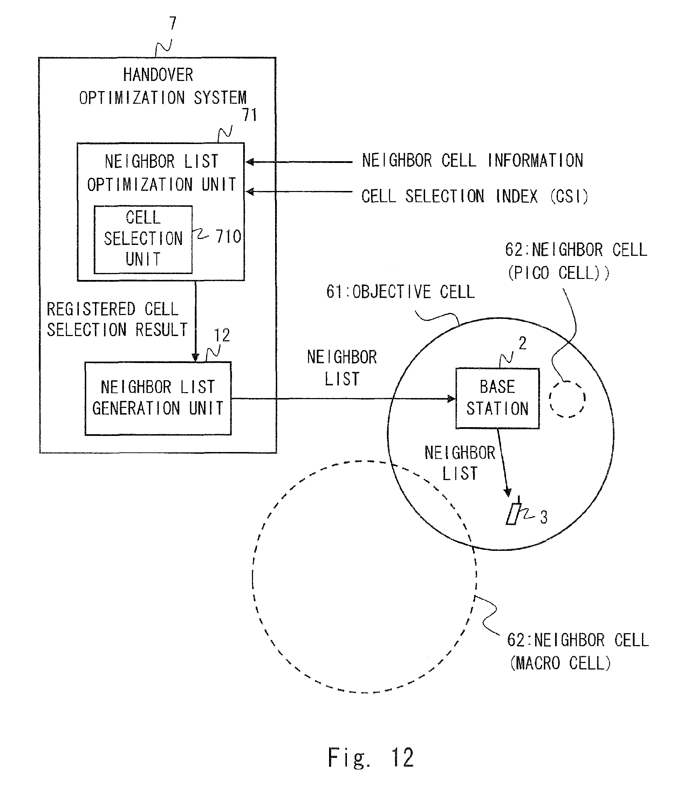

Fig. 12 shows a configuration example of a network including a handover optimization system 7 according to this reference example. The outline of Fig. 12 is similar to that of Fig. 1 described above. Specifically, the handover optimization system 7 performs processing of updating a neighbor list regarding the objective cell 61. The neighbor list of the objective cell 61 is sent from the base station 2 that manages the objective cell 61 using a radio channel that can be received by the UE 3.

The handover optimization system 7 includes a neighbor list optimization unit 71 and a neighbor list generation unit 12. The neighbor list optimization unit 71 selects, using a criterion to preferentially select cells with relatively large number or high rate of outbound handover failures from the objective cell 61 to a neighbor cell, a plurality of registered cells to be registered in the neighbor list from the plurality of neighbor cells 62. The neighbor list generation unit 12 generates a neighbor list in which information of the plurality of registered cells selected by the neighbor list optimization unit 71 is described, and supplies the neighbor list to the base station 2.

As stated above, by employing, as a registered cell selection criterion, a criterion to preferentially select cells with relatively large number or high rate of outbound handover failures from the objective cell 61 to a neighbor cell, it is possible to preferentially includes information of neighbor cells with high frequency of occurrence of handover failure to a neighbor list. Accordingly, it is possible to adjust handover parameters such as CIO to these cells and to suppress occurrence of handover to a neighbor cell in which handover failure is expected. In short, it is possible to reduce handover failures.

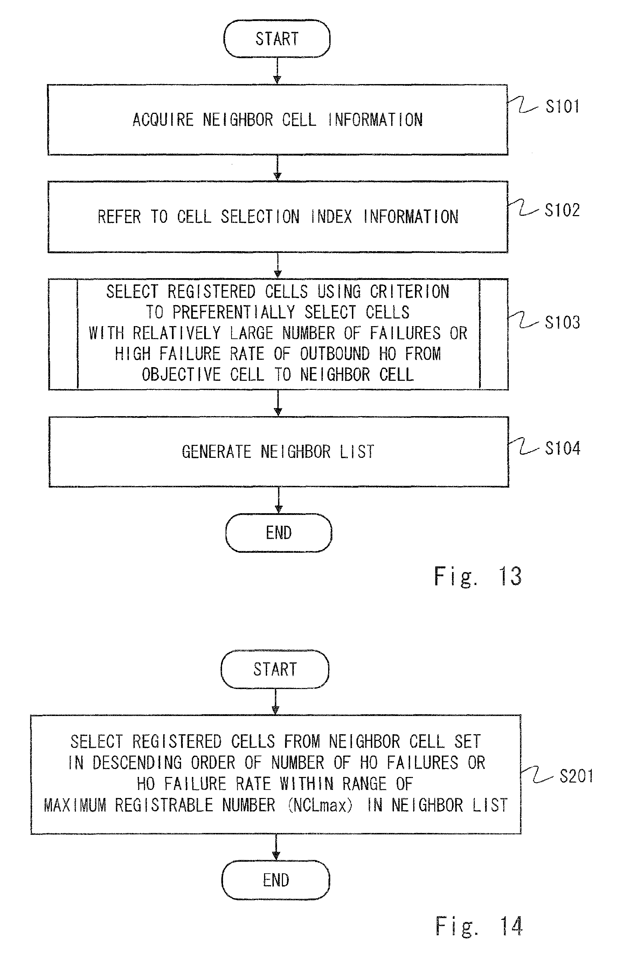

In the following description, an operation of updating the neighbor cell list by the handover optimization system 7, in particular, a specific example of an operation of selecting registered cells by the neighbor list optimization unit 71 will be described in detail. Fig. 13 is a flowchart showing a whole procedure of updating a neighbor cell list by the handover optimization system 7. In Step S101 shown in Fig. 13, the neighbor list optimization unit 71 acquires neighbor cell information. In Step S102, the neighbor list optimization unit 71 refers to a cell selection index (CSI). In Step S103, the neighbor list optimization unit 71 (i.e., cell selection unit 710) selects registered cells using a criterion to preferentially select cells with relatively large number or high rate of outbound handover failures from the objective cell 61 to a neighbor cell. In Step S104, the neighbor list generation unit 12 generates a neighbor list including information of the plurality of registered cells selected in the Step S103. In the following description, with reference to flowcharts (Figs. 14 to 16), three specific examples of the procedure for selecting registered cells in the Step S103 shown in Fig. 13 will be described in more detail.

In Step S201 shown in Fig. 14, the cell selection unit 710 selects registered cells from the neighbor cell set in descending order of the number of HO failures or the HO failure rate within a range of the maximum registrable number NCLmax in a neighbor list.

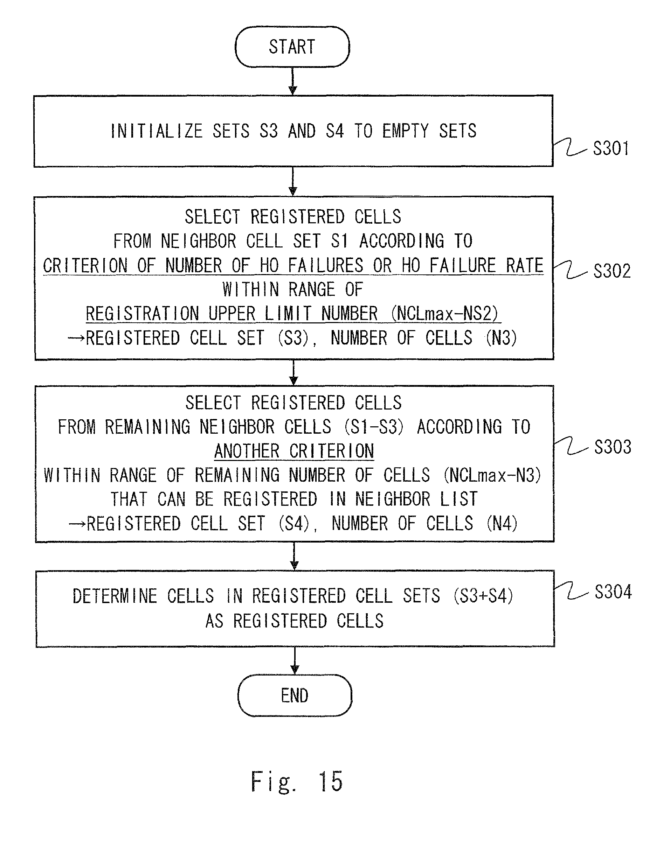

Next, a flow shown in Fig. 15 will be described. In Step S301, the cell selection unit 710 initializes sets S3 and S4 as empty sets.

In Step S302, the cell selection unit 710 selects registered cells from the neighbor cell set S1 according to the criterion that uses the number of HO failures or the HO failure rate within a range of the registration upper limit number (NCLmax- NS2). The number NS2 indicates registrable number (reserved number) reserved for cells that are selected using other criteria described later. The neighbor cells selected in the Step S302 are recorded in the registered cell set S3. Further, the number of neighbor cells selected in the Step S302 is denoted by N3.

In Step S303, the cell selection unit 710 selects registered cells from the remaining neighbor cells (S1-S3) according to a criterion (e.g., criterion that uses the number of measurement reports from the UEs 3 as an index) different from the criterion that uses the number of HO failures or the HO failure rate, within a range of the remaining number of cells (NCLmax- N3) that can be registered in the neighbor list. The neighbor cells selected in the Step S303 are recorded in the registered cell set S4. Further, the number of neighbor cells selected in the Step S303 is denoted by N4.

In Step S304, the cell selection unit 710 determines the cells included in the registered cell sets S3 and S4 as the registered cells. When the number of cells included in the registered cell sets S3 and S4 is below the maximum registrable number NCLmax, the cell selection unit 710 may further select the remaining neighbor cells 62 that have not been selected as the registered cells.

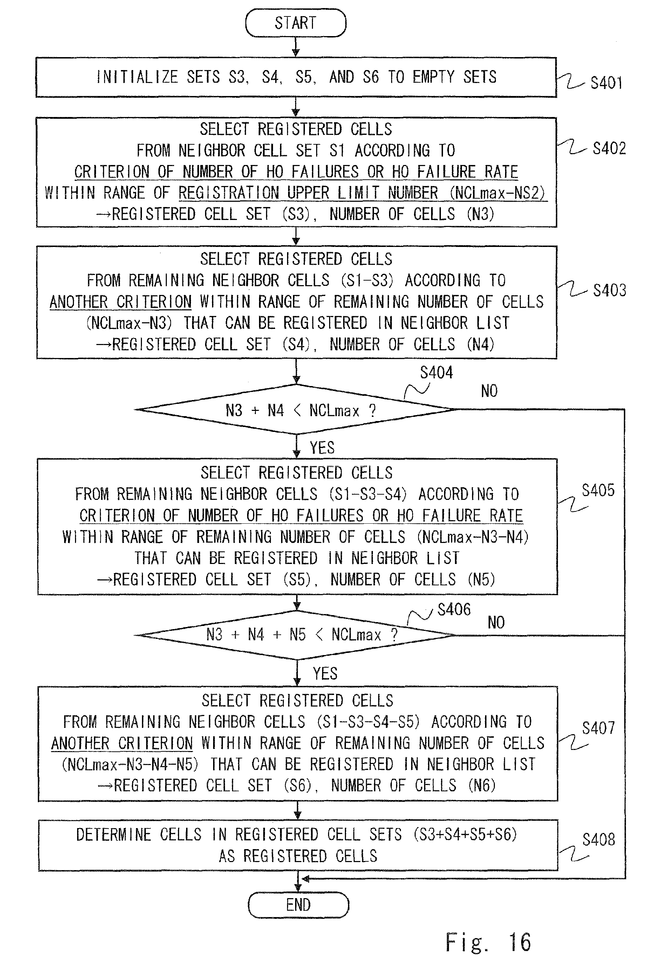

The procedure shown in Fig. 16 is a variation of the procedure shown in Fig. 15. The procedure shown in Fig. 15 shows an example in which further cell selection is performed when the number of cells included in the registered cell sets S3 and S4 is below the maximum registrable number NCLmax.

In Step S401 shown in Fig. 16, the cell selection unit 710 initializes sets S3 to S6 as empty sets. Steps S402 and S403 shown in Fig. 16 are similar to the Steps S302 and S303 shown in Fig. 15.

In Step S404, it is determined whether the number of cells (N3+N4) included in the registered cell sets S3 and S4 is below the maximum registrable number NCLmax. When N3+N4 is smaller than NCLmax (YES in Step S404), registered cells are selected from the remaining neighbor cells (S1- S3- S4) according to the criterion that uses the number of HO failures or the HO failure rate, within a range of the remaining number of cells (NCLmax- N3- N4) that can be registered in the neighbor list (Step S405). In the registered cell selection criterion in Step S405, the threshold may be changed to facilitate the selection of the registered cells compared to the criterion in the Step S402. The neighbor cells selected in the Step S405 are recorded in the registered cell set S5. Further, the number of neighbor cells selected in the Step S405 is denoted by N5.

In Step S406, it is determined whether the number of cells (N3+N4+N5) included in the registered cell sets S3 to S5 is below the maximum registrable number NCLmax. When N3+N4+N5 is smaller than NCLmax (YES in Step S406), registered cells are selected from the remaining neighbor cells (S1- S3- S4- S5) according to a criterion that is different from the criterion that uses the number of HO failures or the HO failure rate, within a range of the remaining number of cells (NCLmax- N3- N4- N5) that can be registered in the neighbor list (Step S407) . In the registered cell selection criterion in step S407, the threshold may be changed to facilitate the selection of the registered cells compared to the criterion in the Step S403. The neighbor cells selected in the Step S407 are recorded in the registered cell set S6. Further, the number of neighbor cells selected in the Step S407 is denoted by N6.

In Step S408, the cell selection unit 710 determines the cells included in the registered cell sets S3 to S6 as registered cells.

The processing of selecting registered cells by the cell selection unit stated in the reference example 1 may be achieved using a semiconductor processing device such as an application specific integrated circuit (ASIC) or a digital signal processor (DSP). Further, the processing of selecting registered cells by the cell selection unit 710 may be achieved by causing a computer such as a microprocessor to execute a program. More specifically, a program including instructions to cause a computer to execute the algorithm shown in any one of Figs. 14 to 16 may be created, and this program may be supplied to the computer.

A part or all of the first embodiment, other embodiments, and the reference example 1 stated above may be described as in the following Supplementary notes. However, it is not limited to them.

(Supplementary note 1)

A neighbor list optimization apparatus that performs optimization of a neighbor list wirelessly transmitted from a base station that manages an objective cell, the neighbor list optimization apparatus comprising:

cell selection means for selecting a plurality of registered cells to be registered in the neighbor list using a first criterion to preferentially select, from a plurality of other cells than the objective cell, a cell with relatively large number or high rate of outbound handover failures from the objective cell to one of the plurality of other cells.

(Supplementary note 2)

The neighbor list optimization apparatus according to Supplementary note 1, wherein the failure rate is a ratio of the number of failures of outbound handover from the objective cell to the number of attempts of outbound handover from the objective cell, or a proportion of the number of failures of outbound handover from the objective cell to the other cell in the total number of failures of outbound handover from the objective cell.

(Supplementary note 3)

The neighbor list optimization apparatus according to Supplementary note 1 or 2, wherein the cell selection means selects the plurality of registered cells based further on cell types defined according to a difference in cell sizes.

(Supplementary note 4)

The neighbor list optimization apparatus according to any one of Supplementary notes 1 to 3, wherein:

the cell types includes a first cell type indicating a first cell and a second cell type indicating a second cell having a cell size different from that of the first cell,
the cell selection means selects registered cells from the first cell group included in the plurality of other cells according to the first criterion, and
the cell selection means selects registered cells from the second cell group included in the plurality of other cells according to a second criterion that is different from the first criterion.

(Supplementary note 5)

The neighbor list optimization apparatus according to Supplementary note 4, wherein the cell selection means selects the plurality of registered cells so that both of the first cell and the second cell are registered in the neighbor list even when one of the number of first cells and the number of second cells included in the plurality of other cells exceeds a maximum registrable number in the neighbor list.

(Supplementary note 6)

The neighbor list optimization apparatus according to Supplementary note 4 or 5, wherein:

the second cell is a cell having a cell size larger than that of the first cell, and
the second criterion includes preferentially selecting, as the registered cells from the second cell group, cells in which outbound handovers from the objective cell to the second cell are expected to be frequently occurred.

(Supplementary note 7)

The neighbor list optimization apparatus according to Supplementary note 4 or 5, wherein:

the second cell is a cell having a cell size larger than that of the first cell, and
the second criterion includes preferentially selecting, as the registered cells from the second cell group, cells with relatively large number of detections by mobile terminals, relatively large number of attempts of outbound handover from the objective cell to the second cell, or relatively large number of reconnections of mobile terminals.

(Supplementary note 8)

The neighbor list optimization apparatus according to any one of Supplementary notes 4 to 7, wherein the cell selection means preferentially selects registered cells from the second cell group, and selects registered cells from the first cell group within a range of the remaining number of cells that can be registered in the neighbor list.

(Supplementary note 9)

The neighbor list optimization apparatus according to Supplementary note 1 or 2, wherein the cell selection means preferentially selects registered cells from the plurality of other cells according to the first criterion, and selects, according to a second criterion that is different from the first criterion, registered cells from a cell group that has not been selected among the plurality of other cells within a range of the remaining number of cells that can be registered in the neighbor list.

(Supplementary note 10)

The neighbor list optimization apparatus according to Supplementary note 9, wherein the cell selection means performs selection of registered cells based on the first criterion within a range of a predetermined number which is smaller than a maximum registrable number in the neighbor list.

(Supplementary note 11)

A neighbor list generation apparatus coupled to the neighbor list optimization apparatus according to any one of Supplementary notes 1 to 10, the neighbor list generation apparatus generating a neighbor list including information of the plurality of registered cells.

(Supplementary note 12)

A base station apparatus coupled to the neighbor list generation apparatus according to Supplementary note 11, the base station apparatus being configured to wirelessly transmit the neighbor list including the information of the plurality of registered cells.

This application is based upon and claims the benefit of priority from Japanese Patent Application No. 2010-284624, filed on December 21, 2010, the disclosure of which is incorporated herein in its entirety by reference

**Reference Signs List**

| | |
|---|---|
| 1 | HANDOVER OPTIMIZATION SYSTEM |
| 2 | BASE STATION |
| 3 | MOBILE TERMINAL |
| 4 | NETWORK MANAGEMENT SYSTEM (NMS) |
| 5 | RADIO NETWORK CONTROLLER (RNC) |
| 7 | HANDOVER OPTIMIZATION SYSTEM |
| 11 | NEIGHBOR LIST OPTIMIZATION UNIT |
| 12 | NEIGHBOR LIST GENERATION UNIT |
| 41 | NETWORK DESIGN INFORMATION |
| 42 | CELL MONITORING INFORMATION |
| 61 | OBJECTIVE CELL |
| 62 | NEIGHBOR CELL |
| 71 | NEIGHBOR LIST OPTIMIZATION UNIT |
| 110 | CELL SELECTION UNIT |
| 710 | CELL SELECTION UNIT |

**Claims**

1. A neighbor list optimization apparatus that performs optimization of a neighbor list wirelessly transmitted by a base station that manages an objective cell, the neighbor list optimization apparatus comprising:

cell selection means for selecting, based on cell types defined according to a difference in cell sizes, a plurality of registered cells to be registered in the neighbor list from a plurality of other cells than the objective cell.

2. The neighbor list optimization apparatus according to Claim 1, wherein the cell types includes a first cell type indicating a first cell and a second cell type indicating a second cell having a cell size different from that of the first cell.

3. The neighbor list optimization apparatus according to Claim 2, wherein the cell selection means selects the plurality of registered cells so that both of the first cell and the second cell are registered in the neighbor list even when one of the number of first cells and the number of second cells included in the plurality of other cells exceeds a maximum registrable number in the neighbor list.

4. The neighbor list optimization apparatus according to Claim 2 or 3, wherein:

the cell selection means selects registered cells from the first cell group included in the plurality of other cells according to a first criterion, and the cell selection means selects registered cells from the second cell group included in the plurality of other cells according to a second criterion that is different from the first criterion.

5. The neighbor list optimization apparatus according to Claim 4, wherein:

the second cell is a cell having a cell size smaller than that of the first cell, and
the second criterion includes preferentially selecting, as the registered cells from the second cell group, cells with relatively large number or high rate of outbound handover failures from the objective cell to the second cell.

6. The neighbor list optimization apparatus according to Claim 5, wherein the failure rate is a ratio of the number of failures of outbound handover from the objective cell to the number of attempts of outbound handover from the objective cell, or a proportion of the number of failures of outbound handover from the objective cell to the second cell in the total number of failures of outbound handover from the objective cell.

7. The neighbor list optimization apparatus according to Claim 4, wherein:

the second cell is a cell having a cell size smaller than that of the first cell, and
the second criterion includes preferentially selecting, as the registered cells from the second cell group, cells in which average dwell time of mobile terminals is relatively short.

8. The neighbor list optimization apparatus according to any one of Claims 4 to 7, wherein:

the first cell is a cell having a cell size larger than that of the second cell, and
the first criterion includes preferentially selecting, as the registered cells from the first cell group, cells in which outbound handovers from the objective cell to the first cell are expected to be frequently occurred.

9. The neighbor list optimization apparatus according to any one of Claims 4 to 7, wherein:

the first cell is a cell having a cell size larger than that of the second cell, and
the first criterion includes preferentially selecting, as the registered cells from the first cell group, cells with relatively large number of detections by mobile terminals, relatively large number of attempts of outbound handover from the objective cell to the first cell, or relatively large number of reconnections of mobile terminals.

10. The neighbor list optimization apparatus according to any one of Claims 2 to 9, wherein the cell selection means preferentially selects registered cells from the first cell group, and selects registered cells from the second cell group within a range of the remaining number of cells that can be registered in the neighbor list.

11. The neighbor list optimization apparatus according to Claim 10, wherein the cell selection means selects registered cells from the first cell group within a range of a predetermined number which is smaller than a maximum registrable number in the neighbor list.

12. The neighbor list optimization apparatus according to Claim 10 or 11, wherein selection of registered cells from the first cell group includes sequentially selecting cells in descending order of the number of detections by mobile terminals.

13. The neighbor list optimization apparatus according to any one of Claims 1 to 12, wherein the neighbor list includes a control parameter for each of the registered cells, the control parameter is used to control outbound handover from the objective cell to the registered cell or to selection of a cell to which a mobile terminal connects at the time of initiating communication.

14. The neighbor list optimization apparatus according to Claim 13, wherein the control parameter includes an offset value added to received power or a signal-to-interference ratio of the registered cell measured by the mobile terminal.

15. The neighbor list optimization apparatus according to any one of Claims 1 to 14, wherein the cell selection means performs cell selection processing based on the cell types when a communication load of the objective cell is equal to or more than a threshold.

16. A neighbor list generation apparatus coupled to the neighbor list optimization apparatus according to any one of Claims 1 to 15, the neighbor list generation apparatus generating a neighbor list including information of the plurality of registered cells.

17. A base station apparatus coupled to the neighbor list generation apparatus according to Claim 16, the base station apparatus being configured to wirelessly transmit the neighbor list including the information of the plurality of registered cells.

18. A neighbor list optimization method that performs optimization of a neighbor list wirelessly transmitted from a base station that manages an objective cell, the method comprising:

selecting, based on cell types defined according to a difference in cell sizes, a plurality of registered cells to be registered in the neighbor list from a plurality of other cells than the objective cell.

19. The method according to Claim 18, wherein the cell types includes a first cell type indicating a first cell and a second cell type indicating a second cell having a cell size different from that of the first cell.

20. The method according to Claim 19, wherein said selecting the plurality of registered cells includes selecting the plurality of registered cells so that both of the first cell and the second cell are registered in the neighbor list even when one of the number of first cells and the number of second cells included in the plurality of other cells exceeds a maximum registrable number in the neighbor list.

21. The method according to Claim 19 or 20, wherein said selecting the plurality of registered cells includes:

   selecting registered cells from the first cell group included in the plurality of other cells according to a first criterion, and
   selecting registered cells from the second cell group included in the plurality of other cells according to a second criterion different from the first criterion.

22. The method according to Claim 21, wherein:

   the second cell is a cell having a cell size smaller than that of the first cell, and
   the second criterion includes preferentially selecting, as the registered cells from the second cell group, cells with relatively large number or high rate of outbound handover failures from the objective cell to the second cell.

23. The method according to Claim 22, wherein the failure rate is a ratio of the number of failures of outbound handover from the objective cell to the number of attempts of outbound handover from the objective cell, or a proportion of the number of failures of outbound handover to the second cell in the total number of failures of outbound handover from the objective cell.

24. The method according to Claim 21, wherein:

   the second cell is a cell having a cell size smaller than that of the first cell, and
   the second criterion includes preferentially selecting, as the registered cells from the second cell group, cells in which average dwell time of mobile terminals is relatively short.

25. The method according to any one of Claims 21 to 24, wherein:

   the first cell is a cell having a cell size larger than that of the second cell, and
   the first criterion includes preferentially selecting, as the registered cells from the first cell group, cells in which outbound handovers from the objective cell to the first cell are expected to be frequently occurred.

26. The method according to any one of Claims 21 to 25, wherein:

   the first cell is a cell having a cell size larger than that of the second cell, and
   the first criterion includes preferentially selecting, as the registered cells from the first cell group, cells with relatively large number of detections by mobile terminals, relatively large number of attempts of outbound handover from the objective cell to the first cell, or relatively large number of reconnections of mobile terminals.

27. The method according to any one of Claims 19 to 25, wherein said selecting the plurality of registered cells includes preferentially selecting registered cells from the first cell group, and selecting registered cells from the second cell group within a range of the remaining number of cells that can be registered in the neighbor list.

28. The method according to Claim 27, wherein said selecting the plurality of registered cells includes selecting registered cells from the first cell group within a range of a predetermined number which is smaller than a maximum registrable number in the neighbor list.

29. A non-transitory computer readable medium that stores a program to cause a computer to execute a neighbor list optimization method,
   wherein the optimization method includes selecting, based on cell types defined according to a difference in cell sizes, a plurality of registered cells to be registered in a neighbor list from a plurality of other cells than an objective cell managed by a base station that transmits the neighbor list .

30. The non-transitory computer readable medium according to Claim 29, wherein the cell types includes a first cell type indicating a first cell and a second cell type indicating a second cell having a cell size different from that of a first cell.

**31.** The non-transitory computer readable medium according to Claim 30, wherein said selecting the plurality of registered cells includes selecting the plurality of registered cells so that both of the first cell and the second cell are registered in the neighbor list even when one of the number of first cells and the number of second cells included in the plurality of other cells exceeds a maximum registrable number in the neighbor list.

**32.** The non-transitory computer readable medium according to Claim 30 or 31, wherein said selecting the plurality of registered cells includes:

selecting registered cells from the first cell group included in the plurality of other cells according to a first criterion; and
selecting registered cells from the second cell group included in the plurality of other cells according to a second criterion that is different from the first criterion.

**33.** The non-transitory computer readable medium according to Claim 32, wherein:

the second cell is a cell having a cell size smaller than that of the first cell, and
the second criterion includes preferentially selecting, as the registered cells from the second cell group, cells with relatively large number or high rate of outbound handover failures from the objective cell to the second cell.

**34.** The non-transitory computer readable medium according to Claim 32, wherein:

the second cell is a cell having a cell size smaller than that of the first cell, and
the second criterion includes preferentially selecting, as the registered cells from the second cell group, cells in which average dwell time of mobile terminals is relatively short.

**35.** The non-transitory computer readable medium according to any one of Claims 32 to 34, wherein:

the first cell is a cell having a cell size larger than that of the second cell, and
the first criterion includes preferentially selecting, as the registered cells from the first cell group, cells in which outbound handovers from the objective cell to the first cell are expected to be frequently occurred.

**36.** The non-transitory computer readable medium according to any one of Claims 32 to 35, wherein:

the first cell is a cell having a cell size larger than that of the second cell, and
the first criterion includes preferentially selecting, as the registered cells from the first cell group, cells with relatively large number of detections by mobile terminals, relatively large number of attempts of outbound handover from the objective cell to the first cell, or relatively large number of reconnections of mobile terminals.

**37.** The non-transitory computer readable medium according to any one of Claims 30 to 36, wherein said selecting the plurality of registered cells includes preferentially selecting registered cells from the first cell group, and selecting registered cells from the second cell group within a range of the remaining number of cells that can be registered in the neighbor list.

**Amended claims under Art. 19.1 PCT**

**1.** (Amended) A neighbor list optimization apparatus that performs optimization of a neighbor list wirelessly transmitted by a base station that manages an objective cell, the neighbor list optimization apparatus comprising:

cell selection means for selecting, using different indices for different cell types defined according to a difference in cell sizes, a plurality of registered cells to be registered in the neighbor list from a plurality of other cells than the objective cell.

**2.** The neighbor list optimization apparatus according to Claim 1, wherein the cell types includes a first cell type indicating a first cell and a second cell type indicating a second cell having a cell size different from that of the first cell.

**3.** The neighbor list optimization apparatus according to Claim 2, wherein the cell selection means selects the plurality of registered cells so that both of the first cell and the second cell are registered in the neighbor list even when one of the number of first cells and the number of second cells included in the plurality of other cells exceeds a maximum registrable number in the neighbor list.

**4.** The neighbor list optimization apparatus according to Claim 2 or 3, wherein:

the cell selection means selects registered cells from the first cell group included in the plurality of other cells according to a first criterion, and the cell selection means selects registered cells from the second cell group included in the plurality of other cells according to a second criterion that is different from the first criterion.

5. The neighbor list optimization apparatus according to Claim 4, wherein:

the second cell is a cell having a cell size smaller than that of the first cell, and
the second criterion includes preferentially selecting, as the registered cells from the second cell group, cells with relatively large number or high rate of outbound handover failures from the objective cell to the second cell.

6. The neighbor list optimization apparatus according to Claim 5, wherein the failure rate is a ratio of the number of failures of outbound handover from the objective cell to the number of attempts of outbound handover from the objective cell, or a proportion of the number of failures of outbound handover from the objective cell to the second cell in the total number of failures of outbound handover from the objective cell.

7. The neighbor list optimization apparatus according to Claim 4, wherein:

the second cell is a cell having a cell size smaller than that of the first cell, and
the second criterion includes preferentially selecting, as the registered cells from the second cell group, cells in which average dwell time of mobile terminals is relatively short.

8. The neighbor list optimization apparatus according to any one of Claims 4 to 7, wherein:

the first cell is a cell having a cell size larger than that of the second cell, and
the first criterion includes preferentially selecting, as the registered cells from the first cell group, cells in which outbound handovers from the objective cell to the first cell are expected to be frequently occurred.

9. The neighbor list optimization apparatus according to any one of Claims 4 to 7, wherein:

the first cell is a cell having a cell size larger than that of the second cell, and
the first criterion includes preferentially selecting, as the registered cells from the first cell group, cells with relatively large number of detections by mobile terminals, relatively large number of attempts of outbound handover from the objective cell to the first cell, or relatively large number of reconnections of mobile terminals.

10. The neighbor list optimization apparatus according to any one of Claims 2 to 9, wherein the cell selection means preferentially selects registered cells from the first cell group, and selects registered cells from the second cell group within a range of the remaining number of cells that can be registered in the neighbor list.

11. The neighbor list optimization apparatus according to Claim 10, wherein the cell selection means selects registered cells from the first cell group within a range of a predetermined number which is smaller than a maximum registrable number in the neighbor list.

12. The neighbor list optimization apparatus according to Claim 10 or 11, wherein selection of registered cells from the first cell group includes sequentially selecting cells in descending order of the number of detections by mobile terminals.

13. The neighbor list optimization apparatus according to any one of Claims 1 to 12, wherein the neighbor list includes a control parameter for each of the registered cells, the control parameter is used to control outbound handover from the objective cell to the registered cell or to selection of a cell to which a mobile terminal connects at the time of initiating communication.

14. The neighbor list optimization apparatus according to Claim 13, wherein the control parameter includes an offset value added to received power or a signal-to-interference ratio of the registered cell measured by the mobile terminal.

15. The neighbor list optimization apparatus according to any one of Claims 1 to 14, wherein the cell selection means performs cell selection processing based on the cell types when a communication load of the objective cell is equal to or more than a threshold.

16. A neighbor list generation apparatus coupled to the neighbor list optimization apparatus 1 according to any one of Claims 1 to 15, the neighbor list generation apparatus generating a neighbor list including information of the plurality of registered cells.

17. A base station apparatus coupled to the neighbor list generation apparatus according to Claim 16, the base station apparatus being configured to wirelessly transmit the neighbor list including the information of the plurality of registered cells.

18. (Amended) A neighbor list optimization method that performs optimization of a neighbor list wirelessly transmitted from a base station that manages an objective cell, the method comprising:

selecting, <u>using different indices for different</u> cell types defined according to a difference in cell sizes, a plurality of registered cells to be registered in the neighbor list from a plurality of other cells than the objective cell.

19. The method according to Claim 18, wherein the cell types includes a first cell type indicating a first cell and a second cell type indicating a second cell having a cell size different from that of the first cell.

20. The method according to Claim 19, wherein said selecting the plurality of registered cells includes selecting the plurality of registered cells so that both of the first cell and the second cell are registered in the neighbor list even when one of the number of first cells and the number of second cells included in the plurality of other cells exceeds a maximum registrable number in the neighbor list.

21. The method according to Claim 19 or 20, wherein said selecting the plurality of registered cells includes:

selecting registered cells from the first cell group included in the plurality of other cells according to a first criterion, and
selecting registered cells from the second cell group included in the plurality of other cells according to a second criterion different from the first criterion.

22. The method according to Claim 21, wherein:

the second cell is a cell having a cell size smaller than that of the first cell, and
the second criterion includes preferentially selecting, as the registered cells from the second cell group, cells with relatively large number or high rate of outbound handover failures from the objective cell to the second cell.

23. The method according to Claim 22, wherein the failure rate is a ratio of the number of failures of outbound handover from the objective cell to the number of attempts of outbound handover from the objective cell, or a proportion of the number of failures of outbound handover to the second cell in the total number of failures of outbound handover from the objective cell.

24. The method according to Claim 21, wherein:

the second cell is a cell having a cell size smaller than that of the first cell, and
the second criterion includes preferentially selecting, as the registered cells from the second cell group, cells in which average dwell time of mobile terminals is relatively short.

25. The method according to any one of Claims 21 to 24, wherein:

the first cell is a cell having a cell size larger than that of the second cell, and
the first criterion includes preferentially selecting, as the registered cells from the first cell group, cells in which outbound handovers from the objective cell to the first cell are expected to be frequently occurred.

26. The method according to any one of Claims 21 to 25, wherein:

the first cell is a cell having a cell size larger than that of the second cell, and
the first criterion includes preferentially selecting, as the registered cells from the first cell group, cells with relatively large number of detections by mobile terminals, relatively large number of attempts of outbound handover from the objective cell to the first cell, or relatively large number of reconnections of mobile terminals.

27. The method according to any one of Claims 19 to 25,
wherein said selecting the plurality of registered cells includes preferentially selecting registered cells from the first cell group, and selecting registered cells from the second cell group within a range of the remaining number of cells that can be registered in the neighbor list.

28. The method according to Claim 27, wherein said selecting the plurality of registered cells includes selecting registered cells from the first cell group within a range of a predetermined number which is smaller than a maximum registrable number in the neighbor list.

29. (Amended) A non-transitory computer readable medium that stores a program to cause a computer to execute a neighbor list optimization method, wherein the optimization method includes selecting, <u>using different indices for different</u> cell types defined according to a difference in cell sizes, a plurality of registered cells to be registered in a neighbor list from a plurality of other cells than an objective cell managed by a base station that transmits the neighbor list .

30. The non-transitory computer readable medium according to Claim 29, wherein the cell types includes a first cell type indicating a first cell and a second cell type indicating a second cell having a cell size different from that of a first cell.

**31.** The non-transitory computer readable medium according to Claim 30, wherein said selecting the plurality of registered cells includes selecting the plurality of registered cells so that both of the first cell and the second cell are registered in the neighbor list even when one of the number of first cells and the number of second cells included in the plurality of other cells exceeds a maximum registrable number in the neighbor list.

**32.** The non-transitory computer readable medium 1 according to Claim 30 or 31, wherein said selecting the plurality of registered cells includes:

selecting registered cells from the first cell group included in the plurality of other cells according to a first criterion; and selecting registered cells from the second cell group included in the plurality of other cells according to a second criterion that is different from the first criterion.

**33.** The non-transitory computer readable medium according to Claim 32, wherein:

the second cell is a cell having a cell size smaller than that of the first cell, and the second criterion includes preferentially selecting, as the registered cells from the second cell group, cells with relatively large number or high rate of outbound handover failures from the objective  cell to the second cell.

**34.** The non-transitory computer readable medium according to Claim 32, wherein:

the second cell is a cell having a cell size smaller than that of the first cell, and the second criterion includes preferentially selecting, as the registered cells from the second cell group, cells in which average dwell time of mobile terminals is relatively short.

**35.** The non-transitory computer readable medium according to any one of Claims 32 to 34, wherein:

the first cell is a cell having a cell size larger than that of the second cell, and the first criterion includes preferentially selecting, as the registered cells from the first cell group, cells in which outbound handovers from the objective cell to the first cell are expected to be frequently occurred.

**36.** The non-transitory computer readable medium according to any one of Claims 32 to 35, wherein:

the first cell is a cell having a cell size larger than that of the second cell, and the first criterion includes preferentially selecting, as the registered cells from the first cell group, cells with relatively large number of detections by mobile terminals, relatively large number of attempts of outbound handover from the objective cell to the first cell, or relatively large number of reconnections of mobile terminals.

**37.** The non-transitory computer readable medium according to any one of Claims 30 to 36, wherein said selecting the plurality of registered cells includes preferentially selecting registered cells from the first cell group, and selecting registered cells from the second cell group within a range of the remaining number of cells that can be registered in the neighbor list.

HANDOVER
OPTIMIZATION SYSTEM — 1

NEIGHBOR LIST
OPTIMIZATION UNIT — 11

CELL
SELECTION
UNIT — 110

NEIGHBOR CELL INFORMATION
+
CELL TYPE INFORMATION

CELL SELECTION INDEX (CSI)

62:NEIGHBOR CELL
(PICO CELL)

61:OBJECTIVE CELL

REGISTERED CELL
SELECTION RESULT

NEIGHBOR LIST
GENERATION UNIT — 12

NEIGHBOR LIST

BASE
STATION — 2

NEIGHBOR
LIST

— 3

62:NEIGHBOR CELL
(MACRO CELL)

Fig. 1

(A) NUMBER OF MEASUREMENT REPORTS

| NEIGHBOR CELL | NUMBER OF MEASUREMENT REPORTS |
|---|---|
| #1 | NR1 |
| #2 | NR2 |
| . . . | . . . |
| #m | NRm |

MACRO SELECTION INDEX I_M

Fig. 2A

(B) HANDOVER STATISTICAL INFORMATION

| NEIGHBOR CELL | NUMBER OF OUTBOUND-HO ATTEMPTS | NUMBER OF OUTBOUND-HO FAILURES | OUTBOUND-HO FAILURE RATE | OCCUPANCY RATE OF NUMBER OF FAILURES |
|---|---|---|---|---|
| #1 | A1 | F1 | FR1 | OR1 |
| #2 | A2 | F2 | FR2 | OR2 |
| . . . | . . . | . . . | . . . | . . . |
| #m | Am | Fm | FRm | ORm |

MACRO SELECTION INDEX I_M       PICO SELECTION INDEX I_P

Fig. 2B

(C) OTHER MONITORING INFORMATION

| NEIGHBOR CELL | NUMBER OF RECONNECTIONS | UE AVERAGE DWELL TIME |
|---|---|---|
| #1 | C1 | T1 |
| #2 | C2 | T2 |
| . . . | . . . | . . . |
| #m | Cm | Tm |

MACRO SELECTION INDEX I_M     PICO SELECTION INDEX I_P

Fig. 2C

4

NETWORK MANAGEMENT SYSMTEM (NMS)

11

NEIGHBOR LIST
OPTIMIZATION UNIT

CELL TYPE
INFORMATION

NW DESIGN
INFORMATION

41

110

NEIGHBOR CELL
INFORMATION
CSI

42

CELL SELECTION
UNIT

CELL MONITORING
INFORMATION

REGISTERED CELL
SELECTION RESULT

MR TABULATED INFORMATION,
HO STATISTICAL INFORMATION,
etc.

62:NEIGHBOR CELL
(MACRO CELL)

61:OBJECTIVE CELL

2

eNB

12

NEIGHBOR
LIST

3

62:NEIGHBOR CELL (PICO CELL)

Fig. 3

NETWORK MANAGEMENT SYSMTEM (NMS) — 4

NEIGHBOR LIST OPTIMIZATION UNIT — 11

CELL SELECTION UNIT — 110

CELL TYPE INFORMATION

NW DESIGN INFORMATION — 41

NEIGHBOR CELL INFORMATION

CSI

CELL MONITORING INFORMATION — 42

REGISTERED CELL SELECTION RESULT

MR TABULATED INFORMATION, HO STATISTICAL INFORMATION, etc.

RADIO NETWORK CONTROLLER (RNC) — 5

NEIGHBOR LIST GENERATION UNIT — 12

NEIGHBOR LIST

62:NEIGHBOR CELL (MACRO CELL)

61:OBJECTIVE CELL

NodeB — 2

NEIGHBOR LIST — 3

62:NEIGHBOR CELL (PICO CELL)

Fig. 4

4

NETWORK MANAGEMENT SYSMTEM (NMS)

11

NEIGHBOR LIST
OPTIMIZATION UNIT

NEIGHBOR CELL
INFORMATION

110

CELL TYPE
INFORMATION

CELL SELECTION
UNIT

CSI

42

CELL MONITORING
INFORMATION

REGISTERED CELL
SELECTION RESULT

MR TABULATED INFORMATION,
HO STATISTICAL INFORMATION,
etc.

RADIO NETWORK CONTROLLER (RNC)

NEIGHBOR LIST
GENERATION UNIT

12

5

62:NEIGHBOR CELL
(MACRO CELL)

NEIGHBOR LIST

61:OBJECTIVE CELL

2

BASE
STATION

NEIGHBOR
LIST

3

62:NEIGHBOR CELL (PICO CELL)

Fig. 5

START

ACQUIRE NEIGHBOR CELL INFORMATION
AND CELL TYPE INFORMATION  — S1

REFER TO CELL SELECTION INDEX  — S2

SELECT REGISTERED CELLS
BASED ON CELL TYPE  — S3

GENERATE NEIGHBOR LIST  — S4

END

Fig. 6

```
                        ┌─────────────┐
                        │    START    │
                        └─────────────┘
                               │
                               ▼
┌──────────────────────────────────────────────────────────┐
│                                                            │      S11
│       INITIALIZE SETS S3 AND S4 TO EMPTY SETS              │
│                                                            │
└──────────────────────────────────────────────────────────┘
                               │
                               ▼
┌──────────────────────────────────────────────────────────┐
│             SELECT REGISTERED CELLS                        │
│      FROM NEIGHBOR MACRO CELL SET S1 ACCORDING TO          │      S12
│   MACRO SELECTION CRITERION WITHIN RANGE OF MAXIMUM        │
│     REGISTRABLE NUMBER (NCLmax) IN NEIGHBOR LIST           │
│   →REGISTERED CELL SET (S3), NUMBER OF CELLS (N3)          │
└──────────────────────────────────────────────────────────┘
                               │
                               ▼
┌──────────────────────────────────────────────────────────┐
│             SELECT REGISTERED CELLS                        │
│      FROM NEIGHBOR PICO CELL SET S2 ACCORDING TO           │
│            PICO SELECTION CRITERION                        │      S13
│ WITHIN RANGE OF REMAINING NUMBER OF CELLS (NCLmax-N3)      │
│      THAT CAN BE REGISTERED IN NEIGHBOR LIST               │
│   →REGISTERED CELL SET (S4), NUMBER OF CELLS (N4)          │
└──────────────────────────────────────────────────────────┘
                               │
                               ▼
┌──────────────────────────────────────────────────────────┐
│   DETERMINE CELLS IN REGISTERED CELL SETS (S3+S4)          │      S14
│              AS REGISTERED CELLS                           │
└──────────────────────────────────────────────────────────┘
                               │
                               ▼
                        ┌─────────────┐
                        │     END     │
                        └─────────────┘
```

Fig. 7

START

| INITIALIZE SETS S3 AND S4 TO EMPTY SETS | S21 |

| SELECT REGISTERED CELLS<br>FROM NEIGHBOR MACRO CELL SET S1 WITHIN RANGE OF<br><u>REGISTRATION UPPER LIMIT NUMBER</u><br><u>(NCLmax−NP) OF MACRO CELLS</u><br>→REGISTERED CELL SET (S3), NUMBER OF CELLS (N3) | S22 |

| SELECT REGISTERED CELLS<br>FROM NEIGHBOR PICO CELL SET S2<br>WITHIN RANGE OF REMAINING NUMBER OF CELLS (NCLmax−N3)<br>THAT CAN BE REGISTERED IN NEIGHBOR LIST<br>→REGISTERED CELL SET (S4), NUMBER OF CELLS (N4) | S23 |

| DETERMINE CELLS IN REGISTERED CELL SETS (S3+S4)<br>AS REGISTERED CELLS | S24 |

END

Fig. 8

START

INITIALIZE SETS S3 AND S4 TO EMPTY SETS — S31

SELECT REGISTERED CELLS
FROM NEIGHBOR MACRO CELL SET S1 ACCORDING TO
MACRO SELECTION CRITERION WITHIN RANGE OF REGISTRATION
UPPER LIMIT NUMBER (NCLmax-NP) OF MACRO CELLS
→REGISTERED CELL SET (S3), NUMBER OF CELLS (N3) — S32

SELECT REGISTERED CELLS
FROM NEIGHBOR PICO CELL SET S2 ACCORDING TO
PICO SELECTION CRITERION WITHIN RANGE OF
REMAINING NUMBER OF CELLS (NCLmax-N3)
THAT CAN BE REGISTERED IN NEIGHBOR LIST
→REGISTERED CELL SET (S4), NUMBER OF CELLS (N4) — S33

DETERMINE CELLS IN REGISTERED CELL SETS (S3+S4)
AS REGISTERED CELLS — S34

END

Fig. 9

START

INITIALIZE SETS S3, S4, S5, AND S6 TO EMPTY SETS — S41

SELECT REGISTERED CELLS
FROM NEIGHBOR MACRO CELL SET S1 ACCORDING TO
MACRO SELECTION CRITERION WITHIN RANGE OF
REGISTRATION UPPER LIMIT NUMBER (NCLmax-NP) OF MACRO CELLS
→REGISTERED CELL SET (S3), NUMBER OF CELLS (N3) — S42

SELECT REGISTERED CELLS
FROM NEIGHBOR PICO CELL SET S2 ACCORDING TO
PICO SELECTION CRITERION WITHIN RANGE OF REMAINING NUMBER OF
CELLS (NCLmax-N3) THAT CAN BE REGISTERED IN NEIGHBOR LIST
→REGISTERED CELL SET (S4), NUMBER OF CELLS (N4) — S43

S44
N3 + N4 < NCLmax ?   NO

YES

SELECT REGISTERED CELLS
FROM REMAINING NEIGHBOR MACRO CELLS (S1-S3) ACCORDING TO
MACRO SELECTION CRITERION WITHIN RANGE OF REMAINING NUMBER OF
CELLS (NCLmax-N3-N4) THAT CAN BE REGISTERED IN NEIGHBOR LIST
→REGISTERED CELL SET (S5), NUMBER OF CELLS (N5) — S45

S46
N3 + N4 + N5 < NCLmax ?   NO

YES

SELECT REGISTERED CELLS
FROM REMAINING NEIGHBOR PICO CELLS (S2-S4) ACCORDING TO
PICO SELECTION CRITERION WITHIN RANGE OF
REMAINING NUMBER OF CELLS (NCLmax-N3-N4-N5)
THAT CAN BE REGISTERED IN NEIGHBOR LIST
→REGISTERED CELL SET (S6), NUMBER OF CELLS (N6) — S47

DETERMINE CELLS IN REGISTERED CELL SETS (S3+S4+S5+S6)
AS REGISTERED CELLS — S48

END

Fig. 10

START

CALCULATE EVALUATION PARAMETER BY MULTIPLYING
FIRST INDEX (E.G., NUMBER OF MEASUREMENT REPORTS) BY ⟶ S51
FIRST WEIGHTING FACTOR W1 FOR
NEIGHBOR MACRO CELL SET S1

CALCULATE EVALUATION PARAMETER BY MULTIPLYING
SECOND INDEX (E.G., NUMBER OF HO FAILURES) BY ⟶ S52
SECOND WEIGHTING FACTOR W2 FOR
NEIGHBOR PICO CELL SET S2

SELECT REGISTERED CELLS FROM NEIGHBOR CELL SETS (S1+S2)
ACCORDING TO ORDER OF MAGNITUDE OF EVALUATION PARAMETER ⟶ S53
WITHIN RANGE OF MAXIMUM REGISTRABLE NUMBER (NCLmax)
IN NEIGHBOR LIST

END

Fig. 11

7

## HANDOVER OPTIMIZATION SYSTEM

71

### NEIGHBOR LIST OPTIMIZATION UNIT

← NEIGHBOR CELL INFORMATION

← CELL SELECTION INDEX (CSI)

#### CELL SELECTION UNIT

710

REGISTERED CELL SELECTION RESULT

12

### NEIGHBOR LIST GENERATION UNIT

NEIGHBOR LIST

62:NEIGHBOR CELL (PICO CELL))

61:OBJECTIVE CELL

2

BASE STATION

NEIGHBOR LIST

3

62:NEIGHBOR CELL (MACRO CELL)

Fig. 12

START

ACQUIRE NEIGHBOR CELL INFORMATION — S101

REFER TO CELL SELECTION INDEX INFORMATION — S102

SELECT REGISTERED CELLS USING CRITERION
TO PREFERENTIALLY SELECT CELLS
WITH RELATIVELY LARGE NUMBER OF FAILURES OR
HIGH FAILURE RATE OF OUTBOUND HO FROM
OBJECTIVE CELL TO NEIGHBOR CELL — S103

GENERATE NEIGHBOR LIST — S104

END

Fig. 13

START

SELECT REGISTERED CELLS FROM NEIGHBOR CELL SET
IN DESCENDING ORDER OF NUMBER OF HO FAILURES OR
HO FAILURE RATE WITHIN RANGE OF
MAXIMUM REGISTRABLE NUMBER (NCLmax) IN NEIGHBOR LIST — S201

END

Fig. 14

```
                        ┌─────────────┐
                        │    START    │
                        └─────────────┘
                               │
                               ▼
┌──────────────────────────────────────────────────────────┐
│                                                            │       S301
│         INITIALIZE SETS S3 AND S4 TO EMPTY SETS            │
│                                                            │
└──────────────────────────────────────────────────────────┘
                               │
                               ▼
┌──────────────────────────────────────────────────────────┐
│                 SELECT REGISTERED CELLS                    │
│        FROM NEIGHBOR CELL SET S1 ACCORDING TO              │
│ CRITERION OF NUMBER OF HO FAILURES OR HO FAILURE RATE      │       S302
│                    WITHIN RANGE OF                         │
│      REGISTRATION UPPER LIMIT NUMBER (NCLmax-NS2)          │
│    →REGISTERED CELL SET (S3), NUMBER OF CELLS (N3)         │
└──────────────────────────────────────────────────────────┘
                               │
                               ▼
┌──────────────────────────────────────────────────────────┐
│                 SELECT REGISTERED CELLS                    │
│  FROM REMAINING NEIGHBOR CELLS (S1-S3) ACCORDING TO        │
│                  ANOTHER CRITERION                         │       S303
│ WITHIN RANGE OF REMAINING NUMBER OF CELLS (NCLmax-N3)      │
│        THAT CAN BE REGISTERED IN NEIGHBOR LIST             │
│    →REGISTERED CELL SET (S4), NUMBER OF CELLS (N4)         │
└──────────────────────────────────────────────────────────┘
                               │
                               ▼
┌──────────────────────────────────────────────────────────┐
│   DETERMINE CELLS IN REGISTERED CELL SETS (S3+S4)          │       S304
│                AS REGISTERED CELLS                         │
└──────────────────────────────────────────────────────────┘
                               │
                               ▼
                        ┌─────────────┐
                        │     END     │
                        └─────────────┘
```

Fig. 15

```
                        ( START )
                            │
                            ▼
┌────────────────────────────────────────────────────────┐
│     INITIALIZE SETS S3, S4, S5, AND S6 TO EMPTY SETS     │──── S401
└────────────────────────────────────────────────────────┘
                            │
                            ▼
┌────────────────────────────────────────────────────────┐
│                  SELECT REGISTERED CELLS                 │
│          FROM NEIGHBOR CELL SET S1 ACCORDING TO          │──── S402
│  CRITERION OF NUMBER OF HO FAILURES OR HO FAILURE RATE   │
│ WITHIN RANGE OF REGISTRATION UPPER LIMIT NUMBER (NCLmax-NS2) │
│      →REGISTERED CELL SET (S3), NUMBER OF CELLS (N3)     │
└────────────────────────────────────────────────────────┘
                            │
                            ▼
┌────────────────────────────────────────────────────────┐
│                  SELECT REGISTERED CELLS                 │
│     FROM REMAINING NEIGHBOR CELLS (S1-S3) ACCORDING TO   │
│ ANOTHER CRITERION WITHIN RANGE OF REMAINING NUMBER OF CELLS │──── S403
│    (NCLmax-N3) THAT CAN BE REGISTERED IN NEIGHBOR LIST   │
│      →REGISTERED CELL SET (S4), NUMBER OF CELLS (N4)     │
└────────────────────────────────────────────────────────┘
                            │
                            ▼
                    S404
            ◇─────────────────────◇      NO
            ◇   N3 + N4 < NCLmax ? ◇───────────┐
            ◇─────────────────────◇           │
                       │ YES                   │
                       ▼                       │
┌────────────────────────────────────────────────────────┐   │
│                  SELECT REGISTERED CELLS                 │   │
│    FROM REMAINING NEIGHBOR CELLS (S1-S3-S4) ACCORDING TO │   │
│  CRITERION OF NUMBER OF HO FAILURES OR HO FAILURE RATE   │─ S405
│   WITHIN RANGE OF REMAINING NUMBER OF CELLS (NCLmax-N3-N4) │   │
│            THAT CAN BE REGISTERED IN NEIGHBOR LIST       │   │
│      →REGISTERED CELL SET (S5), NUMBER OF CELLS (N5)     │   │
└────────────────────────────────────────────────────────┘   │
                       │                       │
                       ▼        S406           │
            ◇─────────────────────◇      NO    │
            ◇ N3 + N4 + N5 < NCLmax ?◇─────────┤
            ◇─────────────────────◇           │
                       │ YES                   │
                       ▼                       │
┌────────────────────────────────────────────────────────┐   │
│                  SELECT REGISTERED CELLS                 │   │
│ FROM REMAINING NEIGHBOR CELLS (S1-S3-S4-S5) ACCORDING TO │   │
│ ANOTHER CRITERION WITHIN RANGE OF REMAINING NUMBER OF CELLS │─ S407
│ (NCLmax-N3-N4-N5) THAT CAN BE REGISTERED IN NEIGHBOR LIST│   │
│      →REGISTERED CELL SET (S6), NUMBER OF CELLS (N6)     │   │
└────────────────────────────────────────────────────────┘   │
                       │                       │
                       ▼                       │
┌────────────────────────────────────────────────────────┐   │
│  DETERMINE CELLS IN REGISTERED CELL SETS (S3+S4+S5+S6)   │─ S408
│               AS REGISTERED CELLS                        │◄──┘
└────────────────────────────────────────────────────────┘
                            │
                            ▼
                        ( END )
```

Fig. 16

<table>
<tr><td colspan="2" align="center">**INTERNATIONAL SEARCH REPORT**</td><td colspan="2">International application No.<br>PCT/JP2011/005116</td></tr>
</table>

A. CLASSIFICATION OF SUBJECT MATTER
*H04W36/04(2009.01)i, H04W16/32(2009.01)i, H04W24/10(2009.01)i*

According to International Patent Classification (IPC) or to both national classification and IPC

B. FIELDS SEARCHED

Minimum documentation searched (classification system followed by classification symbols)
H04B7/24-7/26, H04W4/00-99/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | WO 2007/057977 A1 (Mitsubishi Electric Corp.),<br>24 May 2007 (24.05.2007),<br>paragraphs [0130], [0140], [0161], [0162]<br>& US 2009/0252113 A1 & EP 1954066 A1 | 1-4,7,8,10,<br>11,13-21,24,<br>25,27-32,34,<br>35,37<br>5,6,9,12,22,<br>23,26,33,36 |
| X<br><br><br>Y | WO 2008/041573 A1 (Kyocera Corp.),<br>10 April 2008 (10.04.2008),<br>paragraphs [0043] to [0062], [0065]<br>& JP 2008-85896 A & US 2010/0159927 A1 | 1-4,7,8,10,<br>11,13-21,24,<br>25,27-32,34,<br>35,37<br>5,6,9,12,22,<br>23,26,33,36 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>22 September, 2011 (22.09.11) | Date of mailing of the international search report<br>04 October, 2011 (04.10.11) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2011/005116 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 2001-524789 A (Telefonaktiebolaget LM Ericsson (publ)), 04 December 2001 (04.12.2001), paragraphs [0018], [0037] to [0039] | 1-4,7,8,10, 11,13-21,24, 25,27-32,34, 35,37 |
| Y | & US 6285874 B1 & EP 1033055 A & WO 1999/027736 A1 & CN 1279869 A | 5,6,9,12,22, 23,26,33,36 |
| Y | JP 2009-506703 A (KTFreeTel Co., Ltd.), 12 February 2009 (12.02.2009), paragraphs [0057] to [0065] & US 2008/0225797 A1 & WO 2007/027033 A1 & KR 10-0687407 B1 | 5,6,9,22,23, 26,33,36 |
| Y | JP 2009-506704 A (KTFreeTel Co., Ltd.), 12 February 2009 (12.02.2009), paragraphs [0057] to [0065] & US 2008/0227455 A1 & EP 1929668 A & WO 2007/027034 A1 & KR 10-0687408 B1 | 5,6,9,22,23, 26,33,36 |
| Y | JP 2009-302954 A (NEC Corp.), 24 December 2009 (24.12.2009), paragraphs [0026] to [0028] & US 2009/0312025 A1 & EP 2134120 A1 | 12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010002926 A

- JP 2010284624 A

**Non-patent literature cited in the description**

- **R. KWAN et al.** On Mobility Load Balancing for LTE Systems. *Proc. IEEE 72nd Vehicular Technology Conference VTC2010,* September 2010

- **D. SOLDANI ; I. ORE.** Self-optimizing Neighbor Cell List for UTRA FDD Networks Using Detected Set Reporting. *Proc. IEEE 65th Vehicular Technology Conference VTC2007,* April 2007, 694-698